# EUROPEAN PATENT APPLICATION

(11) **EP 1 561 568 A1**
(43) Date of publication of application: **10.08.2005**
(21) Application number: 05003359.6
(22) Date of filing: 23.04.2002
(51) Int. Cl.: B29C 65/40, B29C 65/78, B32B 27/32, B29L 9/00, B32B 25/04, B32B 31/00, B29C 65/00

(54) **Method and apparatus for producing laminated composite**

(30) Priority: 23.04.2001 JP 2001124770
(62) Divisional of application: 02718631.1
(71) Applicant: Sekisui Chemical Co., Ltd., Osaka-shi, Osaka 530-8565 (JP)
(72) Inventor: Tsujimoto, Michitaka c/o Sekisui Chemical Co. LTD., 8565 J-Osaka-shi (JP); Matsuzaka, Katsuo c/o Sekisui Chemical Co. LTD., 8565 J-Osaka-shi (JP); Yamaguchi, Koji c/o Sekisui Chemical Co. LTD., 8565 J-Osaka-shi (JP); Okabe, Masashi c/o Sekisui Chemicals Co. LTD., 8565 J-Osaka-shi (JP); Hirata, Masanori c/o Sekisui Chemicals co. LTD., 8565 J-Osaka-shi (JP); Ishiyama, Masafumi c/o Sekisui Chemicals Co. LTD., 8565 J-Osaka-shi (JP)
(74) Representative: Paul, Dieter-Alfred, Dipl.-Ing.

(57) **Abstract**

A device for producing a laminated composite comprising: core supplying means (1, 19) for supplying a core material (c) in a longitudinal direction; longitudinal sheet supplying means (2, 5) for supplying a longitudinal sheet (S1) for a face material in the longitudinal direction onto at least one face of the core material (C); lateral sheet supplying means (21, 56, 57, 62, 63) for supplying a lateral sheet (S2) for the face material in a lateral direction onto the upper face of the longitudinal sheet (S1); and sheet thermocompression-bonding means (4, 58, 64) for pressing the longitudinal sheet (S1) and the lateral sheet (S2) stacked in an orthogonal form against the core material (C) under heating.

## Description

The present invention relates to a method and a device for producing a laminated composite which is used as a civil engineering and construction material, a construction material including a tatami mat core material, a material for vehicles and so on, and has a high rigidity, and more specifically to a device and a method for producing a laminated composite which is suitable, for example, when a polyolefin resin drawn sheet is laminated on at least one face of a sheet-form core material having a density of 30 to 300 kg/m³, or when a longitudinal sheet and a lateral sheet are laminated on at least one face of a core material.

Throughout the present specification, longitudinal and lateral directions are defined on the basis of the direction of a core material. The term "longitudinal" means the length direction of a core material, and the term "lateral" means the width direction of the core material. A longitudinal sheet means a sheet supplied in the length direction of a core material, and a lateral sheet means a sheet supplied in the width direction of the core material.

For a civil engineering and construction material, a construction material including a tatami mat core material, a material for vehicles, and the like, the so-called sandwich structure in which a plastic foamed body is used as a light core material and high-strength face materials are laminated on both surfaces thereof, has been actively developed as a material instead of a woody board which has been conventionally used. For example, Japanese Unexamined Patent Publication No. 6-134913 (1994) describes a laminated product wherein a polypropylene foamed body sheet is sandwiched between glass fiber reinforced polypropylene type resin layers, and also describes, as a method for producing the same, a method of heating a glass fiber reinforced polypropylene layer to not less than the melting point thereof to be made into a melting state, stacking this with a surface of a foamed body sheet, adhering them to each other to melt the surface of the foamed body sheet with heat which the polypropylene layer has, thereby melting and adhering the two to each other, and subsequently cooling and solidifying the two so as to be integrated with each other.

The present inventors advanced the development of a sandwich structure as described above. As a result, the inventors suggested a composite lamination wherein a reinforcing face material made of a polyolefin resin drawn sheet drawn up 10 times or more is laminated on a polyolefin resin foamed body sheet (an example of a sheet-form core material having a density of 30 to 300 kg/m³) (Japanese Patent Application No. 2001-13553). This composite lamination has the following advantages as compared with the product described in Japanese Unexamined Patent Publication No. 6-134913 (1994):
· Since no glass fiber is used, the lamination is friendly to working environment and friendly to use environment;
· Since the material thereof is made only of the polyolefin resin, the lamination can be re-melted or reworked and can be recycled; and
· The composite lamination deforms plastically in a certain bending strain area, and the shape thereof is kept.

However, if the reinforcing face material is heated to the melting point thereof or higher in order to attempt the production of this composite lamination by the method described in Japanese Unexamined Patent Publication No. 6-134913 (1994), the drawn orientation of the molecules is lost since the reinforcing face material is made of the polyolefin resin drawn sheet. As a result, desired flexural-rigidity and linear expansion property cannot be obtained.

The laminating described above is usually controlled by laminating-pressure. However, the compression property of the foamed body varies dependently on laminating-temperature; therefore, it is necessary to change the laminating-pressure dependently on the temperature. Furthermore, a problem that the thickness of manufactured product is scattered arises.

In recent years, in the field of house design, attention has been paid to the so-called barrier-free housing, wherein no step is present between a Japanese-style room and a Western-style room, as housing of a compromise type between Japanese and Western styles. However, conventional tatami mats (thick tatami mats) used in Japanese-style rooms have a thickness of approximately 55 mm; therefore, in order to remove a step between a Japanese-style room and a Western-style room using flooring materials for western-style rooms, the main current thickness of which is from approximately 5 to 20 mm, it is necessary to take measures in construction work, for example, lower the ground-beam sleeper of the Japanese-style room or increase the bulk of a floor bed of the Western room. Thus, a problem that construction work becomes much complicated is involved.

In order to cope with the above-mentioned problem, in recent years thin tatami mats having a thickness of approximately 7 to 25 mm have been commercially available instead of the conventional thick tatami mats. The thin tatami mats have advantages that application thereof is easy and exchange between a Japanese-style room and a Western-style room can easily be performed.

The performance required for the tatami mat material for thin tatami mats is that the material has flexural-rigidity even if the material is thin, and the linear expansion coefficient thereof is as small as possible. Specifically, as described in the specification of Japanese Patent Application No. 13-33990 (2001), a tatami mat core material made of a laminated composite satisfying the above-mentioned requirements can be produced by laminating a sheet, for a face material, made of a polyolefin resin drawn sheet having a linear expansion coefficient of 5 x 10⁻⁵ (1/°C) or less on at least one face of a core material made of a polyolefin foamed body sheet in which cells extend in a spindle form in the thickness direction.

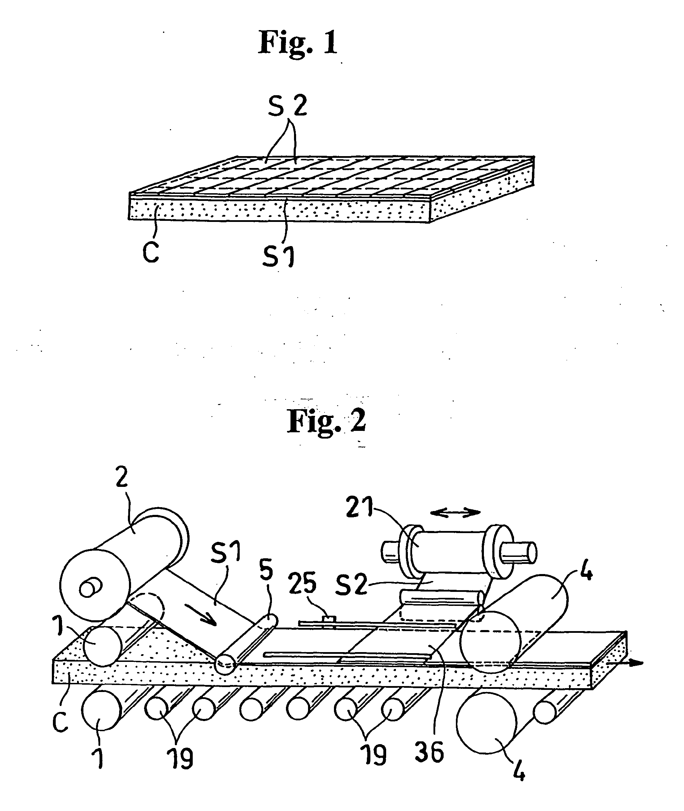

In order to exhibit the performance of the above-mentioned laminated composite at maximum, it is preferred to cross sheets for a face material which laminate on a surface of a core material (C) in the longitudinal direction and in the lateral direction, as illustrated in Fig. 1. This is because the face material is composed of longitudinal sheets (S1) and lateral sheets (S2) in an orthogonal form in this way, whereby anisotropy in the longitudinal direction and the lateral direction is cancelled.

In order to laminate sheets for a face material, in a longitudinally and laterally orthogonal-form, beforehand on a core material, it has been necessary in the conventional art to set longitudinal sheets and lateral sheets in an orthogonal form on a surface of the core material and then thermally melt and adhere them with a press or bond them with an adhesive agent. In this method, however, the operation for producing the lamination is intermittent; therefore, the speed of the production is small and a large amount of scrap material is generated and production efficiency is low, thereby resulting in high costs.

In light of the problems in the conventional art, an object of the present invention is to provide a device and a method which make it possible to continuously perform an operation for laminating sheets, for a face material, in a longitudinally and laterally orthogonal form on a core material and to produce a tatami core material made of a laminated composite with a high production efficiency.

This object is solved by a device for producing a laminated composite by laminating a longitudinal sheet and a lateral sheet on at least one face of a core material, including: a core supplying means for supplying the core material in a longitudinal direction; a longitudinal sheet supplying means for supplying the longitudinal sheet for a face material in the longitudinal direction onto at least one face of the core material; a lateral sheet supplying means for supplying the lateral sheet for the face material in a lateral direction onto the upper or lower face of the longitudinal sheet; and a sheet thermocompression-bonding means for pressing the longitudinal sheet and the lateral sheet stacked in an orthogonal form against the core material under heating.

Further this object is solved by a method for producing a laminated composite by laminating a longitudinal sheet and a lateral sheet on at least one face of a core material, including: a core supplying step of supplying the core material in a longitudinal direction, a longitudinal sheet supplying step of supplying the longitudinal sheet for a face material in the longitudinal direction onto at least one face of the core material; a lateral sheet supplying step of supplying the lateral sheet for the face material in a lateral direction onto the upper or lower face of the longitudinal sheet; and a sheet thermocompression-bonding step of pressing the longitudinal sheet and the lateral sheet stacked in an orthogonal form against the core material under heating.

In an embodiment of the invention at a position where the longitudinal sheet starts to contact a heating roll of the sheet thermocompression-bonding means the lateral sheet supplying means supplies a cut piece of the lateral sheet between the heating roll and the longitudinal sheet.

The method for producing a laminated composite may further include a lateral sheet supplying step of supplying a cut piece of the lateral sheet between a heating roll and the longitudinal sheet at a position where the longitudinal sheet starts to contact the heating roll during the sheet thermocompression-bonding step.

In the device for producing a laminated composite the longitudinal sheet supplying means is a means for supplying upper side longitudinal sheets and lower side longitudinal sheets to be arranged alternatively in the lateral direction, and the lateral sheet supplying means is a means for supplying plural lateral sheets successively between the upper side longitudinal sheets and the lower side longitudinal sheets so as to be arranged in parallel.

In the method for producing a laminated composite the longitudinal sheet supplying step may be a step of supplying upper side longitudinal sheets and lower side longitudinal sheets to be arranged alternatively in the lateral direction, and the lateral sheet supplying step may be a step of supplying plural lateral sheets successively between the upper side longitudinal sheets and the lower side longitudinal sheets so as to be arranged in parallel.

Further in the device for producing a laminated composite the lateral sheet supplying means may include an attracting roll set at a position where the longitudinal sheet starts to contact the heating roll of the sheet thermocompression-bonding means, and single sheet supplying means for supplying cut pieces of the lateral sheet one by one to the attracting roll.

In the method for producing a laminated composite the lateral sheet supplying step may include a single sheet supplying step of supplying cut pieces of the lateral sheet one by one to an attracting roll set at a position where the longitudinal sheet starts to contact the heating roll during the sheet thermocompression-bonding step.

A device producing a laminated composite by laminating a longitudinal sheet and a lateral sheet on at least one face of a core material according to the invention may further include a first thermocompression-bonding means for pressing the longitudinal sheet and the core material under heating to form an intermediate lamination; a first cutting means for cutting the intermediate lamination; a carrying means for carrying cut pieces of the intermediate lamination in a direction having a given angle to the longitudinal direction; a lateral sheet supplying means for supplying the lateral sheet for the face material, in the carriage direction, onto the upper face or the lower face of the cut pieces; a second thermocompression-bonding means for pressing the cut pieces of the intermediate lamination and the lateral sheet, which are stacked, under heating to form a final lamination; and a second cutting means for cutting the final lamination.

A method for producing a laminated composite by laminating a longitudinal sheet and a lateral sheet on at least one face of a core material, may include a first thermocompression-bonding step of pressing the longitudinal sheet and the core material under heating to form an intermediate lamination; a first cutting step of cutting the intermediate lamination; a carrying step of carrying cut pieces of the intermediate lamination in a direction having a given angle to the longitudinal direction; a lateral sheet supplying step of supplying the lateral sheet for the face material, in the carriage direction, onto the upper face or the lower face of the cut pieces; a second thermocompression-bonding step of stacking and pressing the cut pieces of the intermediate lamination and the lateral sheet under heating to form a final lamination; and a second cutting step of cutting the final lamination.

A device for producing a laminated composite by laminating a longitudinal sheet and a lateral sheet on at least one face of a core material according to the invention may also include a first thermocompression-bonding means for pressing the longitudinal sheet and the core material under heating to form an intermediate lamination; a first cutting means for cutting the intermediate lamination; a carrying means for rotating cut pieces of the intermediate lamination at an angle of 90° to carry the cut pieces in the longitudinal direction; a lateral sheet supplying means for supplying the lateral sheet for the face material, in the longitudinal direction, onto the upper face or the lower face of the cut pieces; a second thermocompression-bonding means for pressing the cut pieces of the intermediate lamination and the lateral sheet, which are stacked, under heating to form a final lamination; and a second cutting means for cutting the final lamination.

A method according to the invention may also include a first thermocompression-bonding step of pressing the longitudinal sheet and the core material under heating to form an intermediate lamination; a first cutting step of cutting the intermediate lamination; a carrying step of rotating cut pieces of the intermediate lamination at an angle of 90° to carry the cut pieces in the longitudinal direction; a lateral sheet supplying step of supplying the lateral sheet for the face material, in the longitudinal direction, onto the upper face or the lower face of the cut pieces; a second thermocompression-bonding step of stacking and pressing the cut pieces of the intermediate lamination and the lateral sheet under heating to form a final lamination; and a second cutting step of cutting the final lamination.

The invention is carried out as embodiments described below.

It is sufficient that the core material has rigidity, and it is in general preferred that the core material is a board having a certain measure of thickness, for example, a thickness of 1 mm or more.

Examples of the core material board include the following:
Boards made of a thermoplastic resin such as polyethylene resin, polyethylene copolymer resin, ethylene-vinyl acetate copolymer resin, polypropylene resin, ABS resin, vinyl chloride resin, vinyl chloride copolymer, vinylidene chloride resin, polyamide resin, polycarbonate resin, polyethylene terephthalate resin, polyimide resin, or polyurethane resin. These thermoplastic resins may be used alone or in a blend form. Of course, the board may be made light by foaming treatment or the like.

The core material board may be a board made of both plastic corrugated cardboard or plastic honeycomb and a face material.

Boards made of a thermosetting resin such as urethane resin, unsaturated polyester resin, epoxy resin, phenol resin, melamine resin, urea resin, diallylphthalate resin, or xylene resin.

Woody fiber boards, wherein woody fibers are hardened with an adhesive agent or the like, such as insulation boards (A-class insulations, tatami-boards, and seizing boards), MDF (middle fiber plates), and HDF (hard fiber boards); woody chip boards, wherein woody chips are hardened with an adhesive agent, such as particle boards; plywood (that is, material obtained by laminating plural veneer sheets on each other perpendicularly), and veneer sheet laminated material (that is, material obtained by plural veneer sheets in parallel); longitudinally spliced material (that is, material wherein sweeping boards are longitudinally spliced with finger joints; assembly material (that is, material wherein sweeping boards are laminated on each other); and woody board products.

It is allowable to use boards wherein the above-mentioned plate material as a face material is sandwiched between paper honeycombs or metal honeycombs.

Iron sheets such as melted zinc steel sheets, zinc aluminum alloy steel sheets, and stainless steel sheets. Nonferrous metal sheets made of aluminum, titanium, copper or the like.

In order to improve the bonding property of the core material to a sheet for face material, which is laminated on this core material, it is naturally allowable to deposit an adhesive layer on the core material or the face material sheet beforehand, or apply an adhesive agent thereto.

A two-layer type, wherein the core material and the face material are melted and bonded by heating, is basically used. Dependently on use, however, an adhesive layer may be interposed between the core material and the face material.

Examples of the method for depositing the adhesive layer include a method of inserting a film, which will be the adhesive layer, between the core material and the face material sheet, supplying them between rolls at the same time, and heating and pressing them; a method of coating, at the time of supplying the core material and the face material sheet between rolls, at least one thereof with an adhesive agent by means of a roll coater, a gun or the like, thereby forming the adhesive layer; and a method of forming the adhesive layer on at least one of the core material and the face material sheet beforehand, and heating and pressing them at the time of being passed between rolls, thereby laminating them.

Examples of the film which makes up to the adhesive layer include films made of linear low density polyethylene resin, middle density polyethylene resin, very low density polyethylene resin, ethylene-vinyl acetate copolymer resin, high density polyethylene resin, polypropylene resin, ionomer resin, EMAA resin, or polyacrylonitrile resin.

Examples of the adhesive agent include vinyl acetate resin emulsion adhesive agents, acrylic emulsion adhesive agents, vinyl acetate copolymer emulsion adhesive agents, polyvinyl alcohol adhesive agents, vinyl acetate resin mastic adhesive agents, dope cements, monomer cements, vinyl chloride resin adhesive agents, ethylene-vinyl acetate copolymer hot melt adhesive agents, polyamide type hot melt adhesive agents, polyester type hot melt adhesive agents, thermoplastic rubber type adhesive agents, urethane hot melt adhesive agents, chloroprene rubber type adhesive agents, synthetic rubber type adhesive agents, natural rubber type adhesive agents, urea resin adhesive agents, melamine resin adhesive agents, phenol resin adhesive agents, epoxy resin adhesive agents, and polyurethane type adhesive agents.

It is sufficient that the face material sheet is a material flexible along the curvature of rolls in order to embrace the rolls. A sheet having a small thickness, for example, a sheet having a thickness of 1 mm or less is preferred. Examples of such a sheet include sheets described below.

Sheets which are caused to have anisotropy in mechanical properties (such as tensile strength and linear expansion coefficient) by drawing, orientation or the like and made of a thermoplastic resin such as polyethylene resin, polypropylene resin, polyester resin, ABS resin, polycarbonate resin, vinyl chloride resin, acryl-modified vinyl chloride resin, modified polyproplyeneoxide resin, polycarbonate/ABS resin, modified polyphenylene ether resin, acrylic resin, or acryl-styrol resin; glass cloth such as a surface mat obtained by making glass fiber into a paper form, material obtained by weaving glass robbing (a binder for bonding glass short fibers to each other may be contained in the surface mat. Examples of the binder include thermoplastic resin, such as polyvinyl alcohol resin, saturated polyester resin, and acrylic resins, and thermosetting resins such as epoxy resin and unsaturated polyester resin): prepreg sheets, wherein long fibrous materials are hardened with a resin binder (examples of the long fiber include glass fiber, carbon fiber, polyester resin, acrylic fiber, nylon fiber, carbon fiber and aramide fiber); stampable sheets, which are composite materials wherein thermosetting resin and a glass long fiber mat are combined with each other (polypropylene is frequently used as the thermoplastic resin); cheesecloth, woven fabric or nonwoven fabric, and needle punch (cheesecloth, woven fabric or nonwoven fabric, and needle punch are made mainly of synthetic resin fiber of polyester, nylon or the like. Woven fabric may be ordinary cloth made of natural fiber or synthetic fiber. Examples of organic fiber constituting woven fabric or nonwoven fabric include polyester fiber, cotton, acrylic fiber, nylon fiber, carbon fiber and aramide fiber); paper or metal sheets (an iron sheet or nonferrous metal sheets made of aluminum, titanium, copper or the like. Examples of the iron sheet include a melt zinc steel sheet, a melt zinc aluminum alloy steel sheet, and a stainless steel sheet. As such a metal sheet, a rolled thin sheet having a thickness of 0.01 to 2 mm is particularly preferably used. These metals may be arbitrarily plated, or coated with organic paint, inorganic paint or the like, or coated with an adhesive agent; and liquid crystal polymers (macromolecules exhibiting a liquid crystal structure, and examples thereof include liotropic liquid crystal polymers of entirely-aromatic polyamides, a typical example of which is Kevlar, thermotropic liquid crystals of entirely aromatic polyesters, typical examples of which are Zaider and Vectra).

Among the above-mentioned face materials, particularly desired are materials having anisotropy in mechanical properties along the MD direction and the TD direction. Specific examples thereof include prepreg sheets wherein a drawn or oriented sheet of a thermoplastic resin or a long fibrous material thereof is hardened into a sheet-form with a resin binder.

The invention may be carried out, in particular, as embodiments described below.

About the supplied longitudinal sheets or lateral sheets, they may be used alone or a plurality of them may be arranged in parallel. An adhesive layer may be supplied together with the longitudinal sheet.

The temperature of the longitudinal sheet supplied to the core material surface is raised by heating and pressing, so that the sheet is melted and bonded/laminated on the core material. Examples of the heating and pressing means include a heating roll, a heating roll with a belt, and a hot-press. In the case that a heating roll and a heating roll with a belt are used, the core material and the longitudinal sheet are continuously carried. In the case that a hot-press is used, the core material and the longitudinal sheet are intermittently carried. Before the heating and pressing means (step), an auxiliary heating means (step) based on radiant heating, hot-window heating, a plane-heater or the like is set.

The intermediate lamination made of the longitudinal sheet and the core material is cut into a constant-size with a cutting means. Examples of the cutting means include a circular saw, a chip saw, a metal saw, a pushing-down type cutter, and a hot wire.

The intermediate lamination is pushed out with the core material supplying means, so as to be carried. At this time, the carriage may be supported with a driving roll, or assisted with a driving belt. In either case, the carriage up to the end of the cutting of the intermediate lamination is performed in the longitudinal direction.

After the compression-bonding by heating and pressing, the intermediate lamination is preferably cooled to not more than the melting point of the longitudinal sheet by a cooling means (step). Examples of the cooling means include a cooling roll, natural cooling, and air-cooling.

In the invention the constant-size cut pieces of the intermediate lamination made of the longitudinal sheet and the core material is carried in a direction having a given angle to the advancing direction (longitudinal direction), and the lateral sheet is supplied and thermocompression-bonded in the same manner as the longitudinal sheet while the cut pieces of the intermediate lamination move in the carriage direction. The given angle is, for example, 90°, but may be any angle other than 90°. Examples of the means for carrying the cut pieces of the intermediate lamination include a member of pushing out the pieces with a cylinder or the like, and a member of holding up the cut pieces with an attracting pad or supporting the cut pieces on a turntable to deliver the pieces to the next carrying line, and carrying the pieces with a roll, a belt or the like.

In the invention the constant-size cut pieces of the intermediate lamination made of the longitudinal sheet and the core material are rotated by 90° and further carried in the advancing direction (longitudinal direction), and the lateral sheet is supplied and thermocompression-bonded in the same manner as the longitudinal sheet while the cut pieces move in the longitudinal direction. Examples of the means for rotating the cut pieces of the intermediate lamination by 90° to the carriage direction while the carriage direction of the cut pieces is kept as it is include a member of using a turntable or a member of holding up the cut pieces with an attracting pad and rotating the pieces.

The device for producing a laminated composite includes a core supplying means for supplying the core material in the longitudinal direction, a longitudinal sheet supplying means for supplying a longitudinal sheet for a face material in the longitudinal direction onto at least one face of the core material, a lateral sheet supplying means for supplying the lateral sheet for the face material in the lateral direction onto the upper or lower face of the longitudinal sheet, and a sheet thermocompression-bonding means for pressing the longitudinal sheet and the lateral sheet stacked in an orthogonal form against the core material under heating. Therefore, the longitudinal sheet and the lateral sheet can be continuously laminated, into an orthogonal form, on the core material.

The method for producing a laminated composite includes a core supplying step of supplying the core material in the longitudinal direction, a longitudinal sheet supplying step of supplying the longitudinal sheet for a face material in the longitudinal direction onto at least one face of the core material, a lateral sheet supplying step of supplying the lateral sheet for the face material in the lateral direction onto the upper or lower face of the longitudinal sheet, and a sheet thermocompression-bonding step of pressing the longitudinal sheet and the lateral sheet stacked in an orthogonal form against the core material under heating. Therefore, the longitudinal sheet and the lateral sheet can be continuously laminated, into an orthogonal form, on the core material.

In the device for producing a laminated composite at a position where the longitudinal sheet starts to contact a heating roll of the sheet thermocompression-bonding, the lateral sheet is supplied between the heating roll and the longitudinal sheet by the lateral sheet supplying means. Therefore, the operation of laminating the sheets for the face material in a longitudinal and laterally orthogonal form on the core can be performed with a high efficiency.

The method for producing a laminated composite further includes a lateral sheet supplying step of supplying a cut piece of the lateral sheet between a heating roll and the longitudinal sheet at a position where the longitudinal sheet starts to contact the heating roll during the sheet thermocompression-bonding step. Therefore, the operation of laminating the sheets for the face material in a longitudinally and laterally orthogonal form on the core can be performed with a high efficiency.

In the device for producing a laminated composite the longitudinal sheet supplying means is a means for supplying upper side longitudinal sheets and lower side longitudinal sheets to be arranged alternatively in the lateral direction, and the lateral sheet supplying means is a means for supplying plural lateral sheets successively between the upper side longitudinal sheets and the lower side longitudinal sheets so as to be arranged in parallel. Therefore, the longitudinal sheet and the lateral sheet can be alternately woven. As a result, a laminated composite having such physical properties that reinforcing strengths in the longitudinal direction and the lateral direction are uniform can be obtained.

In the method for producing a laminated composite the longitudinal sheet supplying step is a step of supplying upper side longitudinal sheets and lower side longitudinal sheets to be arranged alternatively in the lateral direction, and the lateral sheet supplying step is a step of supplying plural lateral sheets successively between the upper side longitudinal sheets and the lower side longitudinal sheets so as to be arranged in parallel. Therefore, the longitudinal sheet and the lateral sheet can be alternately woven. As a result, a laminated composite having such physical properties that reinforcing strengths in the longitudinal direction and the lateral direction are uniform can be obtained.

In the device for producing a laminated composite the lateral sheet supplying means includes an attracting roll set at a position where the longitudinal sheet starts to contact the heating roll of the sheet thermocompression-bonding means, and a single sheet supplying means for supplying cut pieces of the lateral sheet one by one to the attracting roll. Therefore, the longitudinal sheet and the lateral sheet can be continuously adhered, in an orthogonal form, on the surface of the core material.

In the method for producing a laminated composite the lateral sheet supplying step includes a single sheet supplying step of supplying cut pieces of the lateral sheet one by one to an attracting roll set at a position where the longitudinal sheet starts to contact the heating roll during the sheet thermocompression-bonding step. Therefore, the longitudinal sheet and the lateral sheet can be continuously adhered, in an orthogonal form, on the surface of the core material.

The device for producing a laminated composite includes a core material supplying means for supplying the core material in the longitudinal direction, a longitudinal sheet supplying means for supplying the longitudinal sheet for a face material, in the longitudinal direction, onto at least one face of the core material, a first thermocompression-bonding means for pressing the longitudinal sheet and the core material under heating to form an intermediate lamination, a first cutting means for cutting the intermediate lamination, a carrying means for carrying cut pieces of the intermediate lamination in a direction having a given angle to the longitudinal direction, a lateral sheet supplying means for supplying the lateral sheet for the face material, in the carriage direction, onto the upper face or the lower face of the cut pieces, a second thermocompression-bonding means for pressing the cut pieces of the intermediate lamination and the lateral sheet, which are stacked, under heating to form a final lamination, and a second cutting means for cutting the final lamination. Therefore, the longitudinal sheet and the lateral sheet can be continuously laminated, in an orthogonal form, on the core material. Moreover, the lateral sheet can be supplied in a longitudinal state in the same manner as the longitudinal sheet.

The method for producing a laminated composite includes a core material supplying step of supplying the core material in a longitudinal direction, a longitudinal sheet supplying step of supplying the longitudinal sheet for a face material, in the longitudinal direction, onto at least one face of the core material, a first thermocompression-bonding step of pressing the longitudinal sheet and the core material under heating to form an intermediate lamination, a first cutting step of cutting the intermediate lamination, a carrying step of carrying cut pieces of the intermediate lamination in a direction having a given angle to the longitudinal direction, a lateral sheet supplying step of supplying the lateral sheet for the face material, in the carriage direction, onto the upper face or the lower face of the cut pieces, a second thermocompression-bonding step of stacking and pressing the cut pieces of the intermediate lamination and the lateral sheet under heating to form a final lamination, and a second cutting step of cutting the final lamination. Therefore, the longitudinal sheet and the lateral sheet can be continuously laminated, in an orthogonal form, on the core material. Moreover, the lateral sheet can be supplied in a longitudinal state in the same manner as the longitudinal sheet.

The device for producing a laminated composite includes a core material supplying means for supplying the core material in the longitudinal direction, a longitudinal sheet supplying means for supplying the longitudinal sheet for a face material, in the longitudinal direction, onto at least one face of the core material, a first thermocompression-bonding means for pressing the longitudinal sheet and the core material under heating to form an intermediate lamination, a first cutting means for cutting the intermediate lamination, a carrying means for rotating cut pieces of the intermediate lamination at an angle of 90° to carry the cut pieces in the longitudinal direction, a lateral sheet supplying means for supplying the lateral sheet for the face material, in the longitudinal direction, onto the upper face or the lower face of the cut pieces, a second thermocompression-bonding means for pressing the cut pieces of the intermediate lamination and the lateral sheet, which are stacked, under heating to form a final lamination, and a second cutting means for cutting the final lamination. Therefore, the longitudinal sheet and the lateral sheet can be continuously laminated, in an orthogonal form, on the core material. Moreover, the lateral sheet can be supplied in a longitudinal state in the same manner as the longitudinal sheet.

The method for producing a laminated composite includes a core material supplying step of supplying the core material in the longitudinal direction, a longitudinal sheet supplying step of supplying the longitudinal sheet for a face material, in the longitudinal direction, onto at least one face of the core material, a first thermocompression-bonding step of pressing the longitudinal sheet and the core material under heating to form an intermediate lamination, a first cutting step of cutting the intermediate lamination, a carrying step of rotating cut pieces of the intermediate lamination at an angle of 90° to carry the cut pieces in the longitudinal direction, a lateral sheet supplying step of supplying the lateral sheet for the face material, in the longitudinal direction, onto the upper face or the lower face of the cut pieces, a second thermocompression-bonding step of stacking and pressing the cut pieces of the intermediate lamination and the lateral sheet under heating to form a final lamination, and a second cutting step of cutting the final lamination. Therefore, the longitudinal sheet and the lateral sheet can be continuously laminated, in an orthogonal form, on the core material. Moreover, the lateral sheet can be supplied in a longitudinal state in the same manner as the longitudinal sheet.

According to the laminated composite and the production device of the invention, the operation of laminating the sheet for the face material in the longitudinally and laterally orthogonal form on the core material can be continuously performed and the laminated composite can be produced with a high productive efficiency. Accordingly, the laminated composite which has a high flexural-elasticity if the thickness is small and which has a small linear expansion coefficient and no anisotropy can be obtained.
Fig. 1 is a perspective view illustrating a laminated composite wherein a face material in a longitudinally and laterally orthogonal state is laminated on a core material;
Fig. 2 is a perspective view illustrating a device for producing a laminated composite of Example 1;
Figs. 3 (a) , 3 (b) , 3 (c) and 3 (d) are side views each illustrating a supplying roll;
Fig. 4(a) is a perspective view illustrating a sheet meandering correcting device, Fig. 4(b) is a front view of a tension adjusting function, and Figs. 4(c) and 4(d) are plan views illustrating an arrangement of a plurality of narrow sheets constituting a longitudinal sheet;
Figs. 5(a) and 5(b) are perspective views illustrating a lateral sheet supplying means, Fig. 5(c) is a side view illustrating the lateral sheet supplying means, and Fig. 5(d) is a side view illustrating a servo motor;
Fig. 6(a) is a front view illustrating a heating roll, Fig. 6(b) is a side view illustrating the heating roll and a stand, and Figs. 6(c), 6(d) and 6(e) are side views illustrating a driving device of the heating roll;
Figs. 7 (a) and 7(b) are side views illustrating a modification of a device for producing a laminated composite of Example 1;
Fig. 8 (a) is a side view illustrating an example of a device for producing a laminated composite of Example 2, and Fig. 8(b) illustrates an example wherein a non-melting sheet is supplied onto the surface thereof;
Fig. 9(a) is a side view illustrating another modification of the device for producing a laminated composite of Example 2, and Fig. 9(b) illustrates an example wherein a non-melting sheet is supplied onto the surface thereof;
Fig. 10(a) is a side view illustrating a still another modification of the device for producing a laminated composite of Example 2, and Fig. 10(b) illustrates an example wherein a non-melting sheet or a melting sheet is supplied onto the surface thereof;
Fig. 11 is a side view illustrating one embodiment for making a surface functional;
Fig. 12(a) is a side view illustrating a device for producing a laminated composite of Example 3, and Figs. 12(b) and 12(c) are plan views illustrating a lateral sheet supplying means;
Figs. 13(a) and 13(d) are side views illustrating a mechanism for delivering cut pieces of a lateral sheet, and Figs. 13(b) and 13(c) are plan views illustrating the mechanism for delivering cut pieces of a lateral sheet;
Fig. 14(a) is a side view illustrating a device for producing a laminated composite of Example 14, Fig. 14(b) is a perspective view of a main part of the device, and Fig. 14(c) is a perspective view illustrating a laminated composite produced in this device;
Fig. 15(a) is a side view illustrating a device for producing a laminated composite of Example 5, and Fig. 15(b) is a front view of the device;
Fig. 16(a) is a side view illustrating a cassette in which cut pieces of a lateral sheet are stored, Fig. 16(b) is a side view illustrating a means for supplying cut pieces of the lateral sheet, Fig. 16 (c) is a side view illustrating a servo motor, Fig. 16 (d) is a front view illustrating a suction roll, Fig. 16 (e) is a side view illustrating a mechanism for delivering cut pieces of the lateral sheet, and Fig. 16(f) is a front view illustrating a mechanism for continuously supplying lateral sheets;
Fig. 17 is a perspective view illustrating an arrangement of a plurality of narrow sheets constituting a longitudinal sheet;
Fig. 18 is a perspective view illustrating a device for producing a laminated composite of Example 6; and
Fig. 19 is a perspective view illustrating a device for producing a laminated composite of Example 7.

Next, Examples will be given hereinafter in order to describe the present in more detail. The present invention are not limited to only these Examples.

### Example 1

As a core material, a polypropylene foamed body having a foaming magnification of 10 times, a thickness of 10 mm and a width of 1200 mm was used. As a sheet for a face material, a polyethylene drawn sheet having a thickness of 0.2 mm and a width of 1000 mm was used. As an adhesive layer, a very low density polyethylene film (manufactured by Tamapoly Co., Ltd.) having a thickness 60 µm was previously laminated on one face of the sheet for the face material.

As illustrated in Fig. 2, a device for producing a laminated composite of this Example includes a core material supplying means for supplying a core material (C) in the longitudinal direction, a longitudinal sheet supplying means for supplying a longitudinal sheet (S1) for a face material, in the longitudinal direction, on at least one face of the core material (C), a lateral sheet supplying means for supplying a lateral sheet (S2) for the face material, in the lateral direction, on the upper or lower face of the longitudinal sheet (S1), and a sheet thermocompression-bonding means for pressing the longitudinal sheet (S1) and the lateral sheet (S2), which are stacked in an orthogonal form, onto the core material (C) under heating.

The method for producing a laminated composite of this Example includes a core material supplying step of supplying a core material (C) in the longitudinal direction, a longitudinal sheet supplying step of supplying a longitudinal sheet (S1) for a face material, in the longitudinal direction, on at least one face of the core material (C), a lateral sheet supplying step of supplying a lateral sheet (S2) for the face material, in the lateral direction, on the upper or lower face of the longitudinal sheet (S1), and a sheet thermocompression-bonding step of pressing the longitudinal sheet (S1) and the lateral sheet (S2), which are stacked in an orthogonal form, onto the core material (C) under heating.

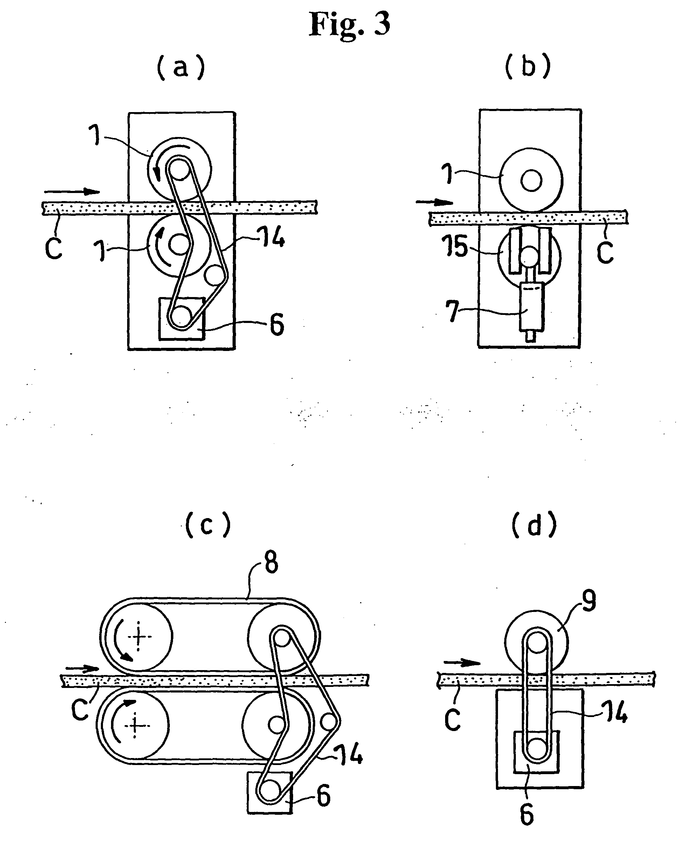

The core supplying means for supplying the core material (C) in the longitudinal direction has a pair of upper and lower supplying rolls (1) having a diameter of 200 mm, and a plurality of feed rollers (19) arranged at the lower stream of the lower supplying roll (1). As illustrated in Fig. 3(a), the pair of the upper and lower supplying rolls (1) are driven through a belt (14) by a driving device (6). The core material (C) sandwiched between these supplying rolls (1) is fed onto the feed roll (19) at a line speed of 1 m/minute.

The supplying rolls (1) may be rubber rolls, metal rolls or resin rolls. As illustrated in Fig. 3(b), the lower roll (15) is lifted or lowered by a lifting device (7) such as an oil pressure cylinder or an air cylinder, and the core material (C) may be closely interposed between the supplying rollers (1).

Examples of the core material supplying means other than the supplying rolls include a device for feeding the core material (C) by belts or caterpillars (8), between which the core material (C) is interposed, as illustrated in Fig. 3(c); and a device for feeding the core material (C) by a roll (9) wherein only its upper face makes in contact with the core material (C) as illustrated in Fig. 3(d). The core material supplying means may be a means having capability of feeding the core material at a constant speed. In these figures, the reference numeral (14) denotes a belt.

The longitudinal sheet supplying means for pulling out the longitudinal sheet, in the longitudinal direction, onto the upper face of the core material has a reel (2) on which the longitudinal sheet (S1) is wound, and a press roll (5) for pressing the longitudinal sheet (S1) pulled out from the reel (2) to the surface of the core material (C) along this against the core material (C).

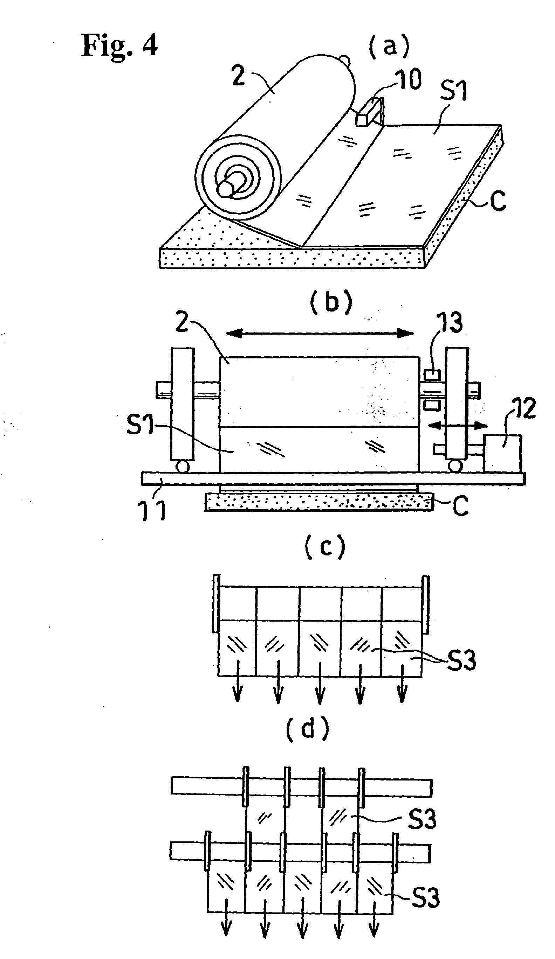

As illustrated in Fig. 4(a), at the lower stream of the reel (2), a sheet meandering correcting device is provided for sensing a deviation in the width direction between the core material (C) and the longitudinal sheet (S1) with a position sensor (10) to correct the center of the longitudinal sheet (S1) to the center of the core material. The sheet meandering correcting device includes a width direction moving device, as illustrated in Fig. 4(b), in order to correct the width direction deviation when it is sensed. This moving device has, for example, a rail (11) arranged in the width direction, the reel (2) which can move thereon, and a cylinder (12) for moving this in the width direction.

In order that the longitudinal sheet (S1) may not loosen, there is provided a tension adjusting function of braking the rotation of the reel (2) by pad brakes (13) between which the axis of the reel (2) is interposed and giving a constant tension to the longitudinal sheet (S1).

In order that the longitudinal sheet made of a plurality of narrow sheets (S3) can be laminated on the core material (C), the narrow sheets (S3) may be arranged in parallel (Fig. 4(c)) or in a staggered form (Fig. 4(d)).

When the state of supplying the longitudinal sheet becomes stable, the lateral sheet (S2) for a face material is supplied in a direction perpendicular to the core material feed direction, that is, the lateral direction by the lateral sheet supplying means.

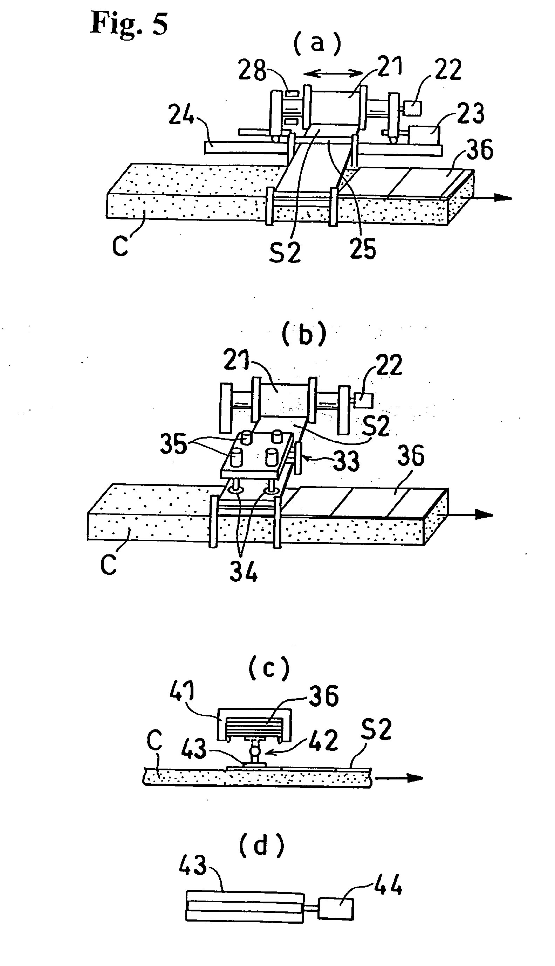

As illustrated in Fig. 5(a), the lateral sheet supplying means has a reel (21) on which the lateral sheet (S2) is wound, and a driving device (22) for driving the reel (21) to send the lateral sheet (S2) in the lateral direction.

The lateral sheet supplying means also includes a reel (24) arranged in the feed direction of the core material (C), the reel (21) which can move thereon, and a cylinder (23) for moving this in the feed direction of the core material (C) at a speed equal to this. When the lateral sheet (S2) is sent out by the width of the core material (C), the lateral sheet (S2) is cut by a cutter (25) and the resultant cut piece (36) is adhered to the surface of the core material (C). Thereafter, the reel (21) is returned to the original position so as to send out another lateral sheet again. This operation is repeated.

The lateral sheet supplying means also has a tension adjusting function based on pad brakes (28) in the same manner as the longitudinal sheet supplying means.

As illustrated in Fig. 5(b), in another example of the lateral sheet supplying means, the lateral sheet (S2) is sent out by the width of the core material (C), so that the lateral sheet (S2) is cut by a cutter (33). The cut piece (36) is attracted on an attracting pad (34), carried onto the surface of the core material by a cylinder (35), and laminated on the core material.

As illustrated in Fig. 5(c), in still another example, the lateral sheet (s2) is previously cut into a length equal to the width of the core material (C). A great number of the cut pieces (36) are stacked inside a cassette (41), and one of the cut pieces (36) is attracted on an attracting pad (43) at the tip of a carriage device (42), rotated by 180°, carried and laminated onto the surface of the core material (C). This operation is repeated. For the 180°-rotation, a servo motor (44) illustrated in Fig. 5(d) is used.

As illustrated in Fig. 2, the sheet thermocompression-bonding means presses the longitudinal sheet (S1) and the lateral sheet (S2) stacked in an orthogonal form on the core material (C) under heating.

In the state that the longitudinal sheet (S1) and the lateral sheet (S2) are laminated on the surface of the core material (C), these are fed to a pair of upper and lower heating rolls (4) having a diameter of 300 mm and a clearance of 10 mm. At a temperature of 120°C and a line speed of 1 m/minute, the longitudinal sheet (S1) and the lateral sheet (S2) are pressed on the core material (C) under heating by the heating rolls (4) at a line speed of 1 m/minute, and further they are fed by the driving of the rolls.

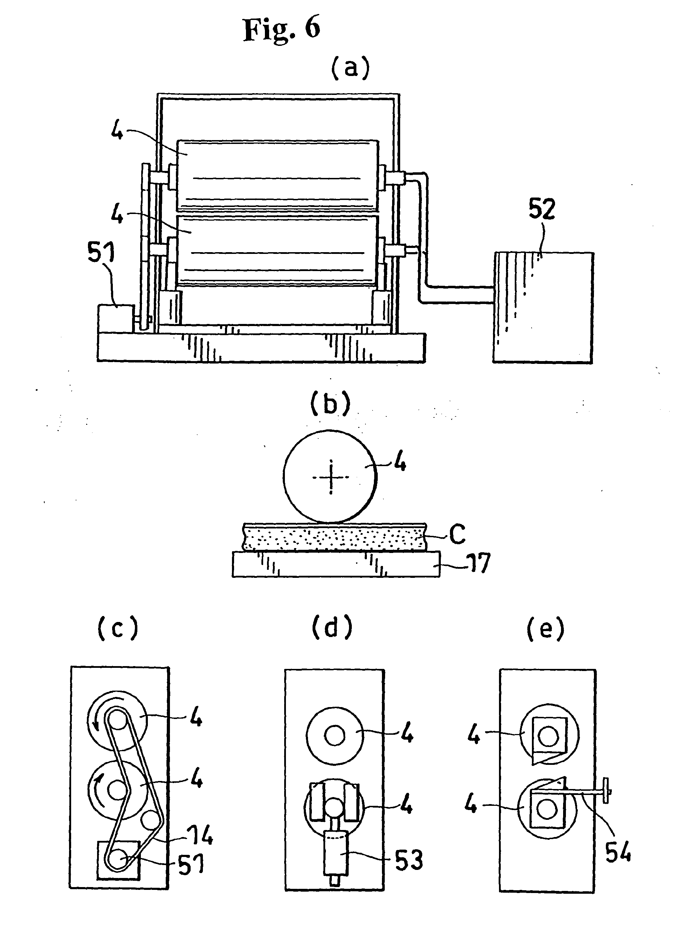

As illustrated in Fig. 6(a), the pair of the upper and lower heating rolls (4) is rotated and driven by a driving device (51), and oil or water as a hot medium is circulated inside a temperature adjustor (52) provided with an electric heater. The heating rolls (4) are rubber rolls, resin rolls or metal rolls, and only the surface thereof may be coated with rubber or resin.

The core material (C) and the sheets for the face material may be interposed between the two heating rolls (4) under pressure, or may be interposed between one heating roll (4) and a flat stand (17) and under pressure, as illustrated in Fig. 6(b).

As illustrated in Fig. 6(c), the driving device (51) for the heating rolls (4) is made to rotate the heating rolls (4) through a belt (14). As illustrated in Fig. 6(d), the lower heating roll (4) is made to be lifted and lowered by a hydraulic cylinder (53). As illustrated in Fig. 6(e), a cotter (54) is attached to the lower heating roll (4) so that the clearance between the rolls can be adjusted.

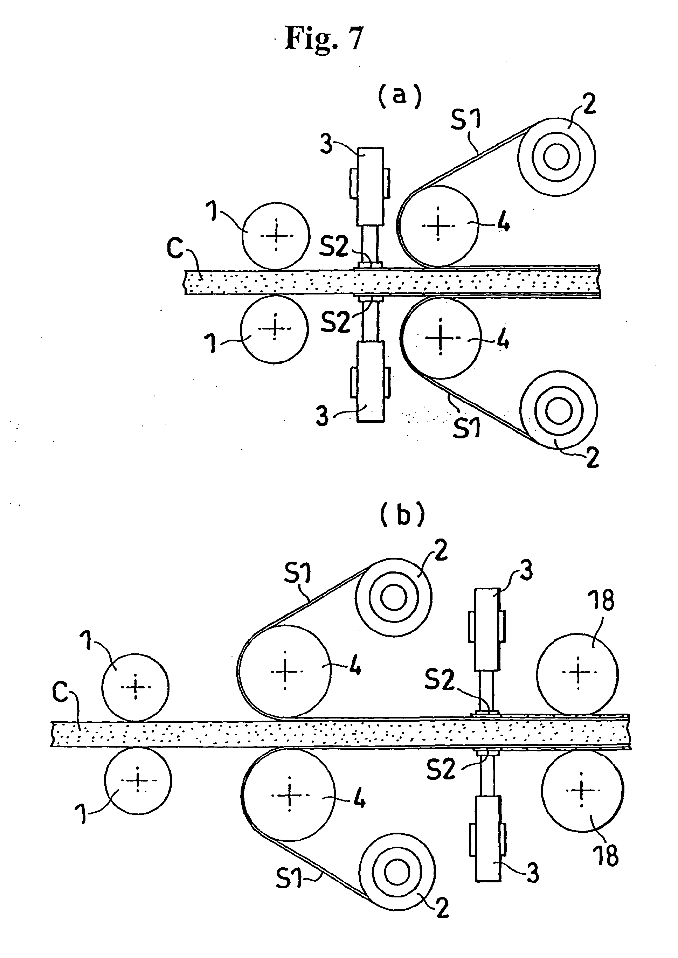

In Fig. 7(a), a pair of upper and lower lateral sheets (S2) is sent out onto the upper and lower faces of the core material (C), as described above. Next, the longitudinal sheet (S1) is supplied along the periphery of the pair of the upper and lower heating rolls (4). Thereafter, the longitudinal sheet (S1) and the lateral sheets (S2) may be melted and bonded to the core material (C), under heating and pressing, by the heating rolls (4). As illustrated in Fig. 7(b), the longitudinal sheet (S1) is first supplied along the periphery of the pair of the upper and lower heating rolls (4), and next a pair of upper and lower lateral sheets (S2) is sent out onto the upper and lower faces of the core material (C), as described above. Thereafter, the longitudinal sheet (S1) and the lateral sheets (S2) can be melted and bonded to the core material (C), under pressing and heating, by another pair of upper and lower heating rolls (18).

The longitudinal sheet (S1) and the lateral sheets (S2) may be laminated on at least one face of the core material (C). If a cooling roll, an air cooling or the like is necessary after the melting and bonding, it is set up just after the heating rolls.

This process allows continuous production of laminated composites wherein the face material in a longitudinal and laterally orthogonal state, which has a width of 1000 mm, is laminated on the core material having a thickness of 10 mm and a width of 1200 mm, illustrated in Fig. 1.

### Example 10

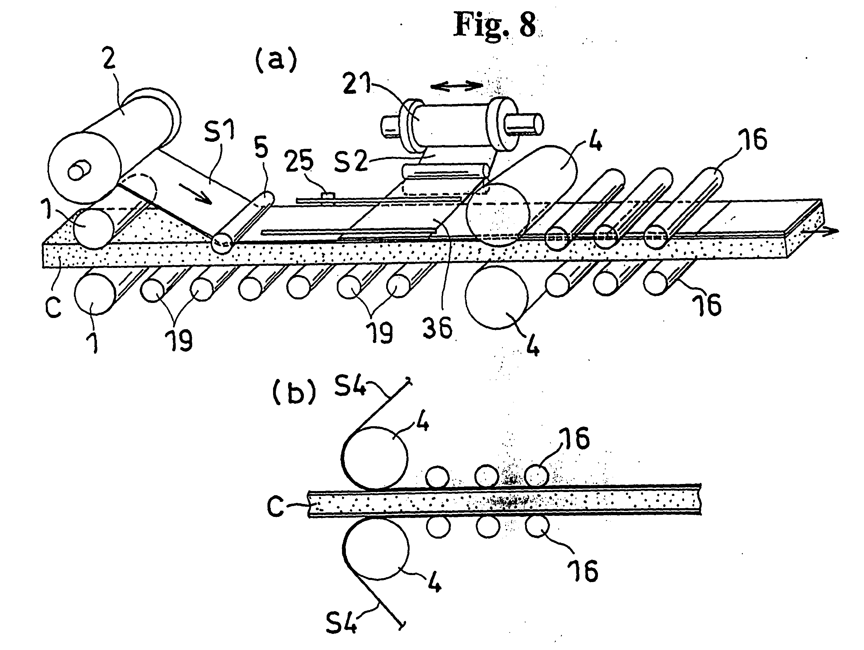

As illustrated in each of Figs. 8, 9 and 10, a device for producing a laminated composite of this Example includes a core material supplying means for supplying a core material (C) in the longitudinal direction, a longitudinal sheet supplying means for supplying a longitudinal sheet (S1) for a face material in the longitudinal direction onto at least one face of the core material (C), a lateral sheet supplying means for supplying a lateral sheet (S2) for the face material in the lateral direction onto the upper or lower face of the longitudinal sheet (S1), and a sheet thermocompression-bonding means for pressing the longitudinal sheet (S1) and the lateral sheet (S2), stacked in an orthogonal form, against the core material under heating.

The method for producing a laminated composite of this Example includes a core material supplying step of supplying a core material (C) in the longitudinal direction, a longitudinal sheet supplying step of supplying a longitudinal sheet (S1) for a face material in the longitudinal direction onto at least one face of the core material (C), a lateral sheet supplying step of supplying a lateral sheet (S2) for the face material in the lateral direction onto the upper or lower face of the longitudinal sheet (S1), and a sheet thermocompression-bonding step of pressing the longitudinal sheet (S1) and the lateral sheet (S2), stacked in an orthogonal form, against the core material under heating.

Hereinafter, points different from Example 1 will be described. To the same reference numerals as in Example 1 are attached the same reference numerals, and description thereof will not be repeated.

A device (a method) for producing a laminated composite of Example 2 further includes a sheet cooling means (step) after the sheet thermocompression-bonding means (step).

In a device for producing a laminated composite illustrated in Figs. 8(a) and 8(b), its sheet cooling means has a plurality of pairs (three pairs in Figs. 8(a) and 8(b)) of upper and lower cooling rolls (16). Cooling water is supplied into the cooling rolls (16). The core material (C) and the sheets (S1) and (S2) for the face material are interposed between the pairs of the upper and lower cooling rolls (16) under pressure. The respective cooling rolls (16) are rotated by the movement of the core material (C) and the sheets (S1) and (S2) for the face material. The cooling rolls (16) are rubber rolls, resin rolls, metal rolls or the like, and may be metal rolls having surfaces coated with rubber or resin.

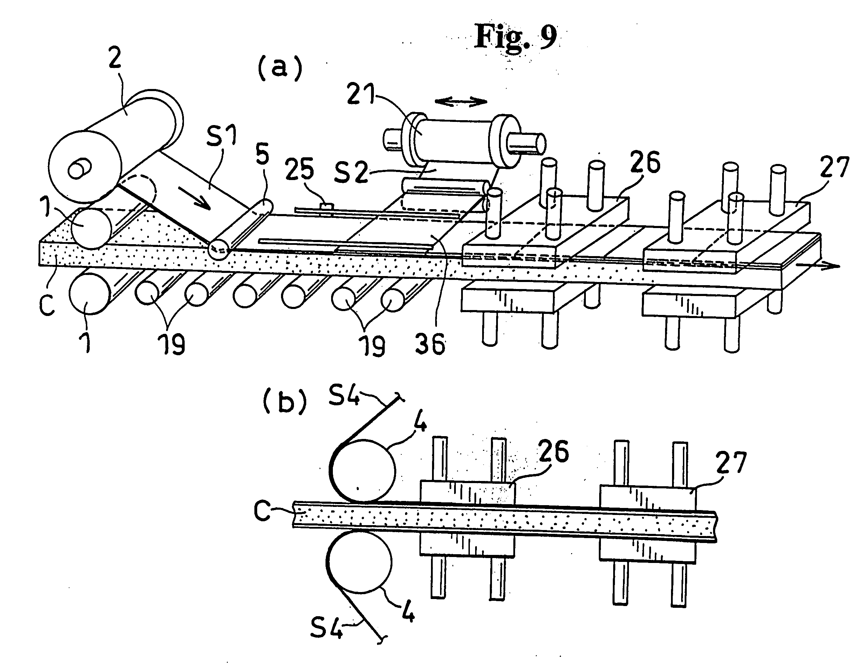

In a device for producing a laminated composite illustrated in Figs. 9(a) and 9(b), as the sheet thermocompression-bonding means, a pair of upper and lower heating presses (26) is used instead of the heating rolls (4), and a sheet cooling means has a pair of upper and lower cooling presses (27) having a size equal to that of the heating presses (26). Inside the heating presses (26), heaters are set up. Cooling water is supplied into the cooling presses (27). The core material (C) and the face material sheets (S1) and (S2) are carried in the state that the sheets (S1) and (S2) are laminated in an orthogonal form, and first heated and pressed by the pair of the heating presses (26). Thereafter, they are cooled by the pair of the cooling presses (27). The feed of the core material (C) and the face material sheets (S1) and (S2) is intermittently performed at a pitch of the width of the presses (26) and (27). A gap corresponding to one of the pitches is set between the heating presses (26) and the cooling rolls (27). This makes continuous production of laminated products possible. Of course, the method of heating the heating presses (26) may be one other than the heater and the method of cooling the cooling presses (27) may be some other method.

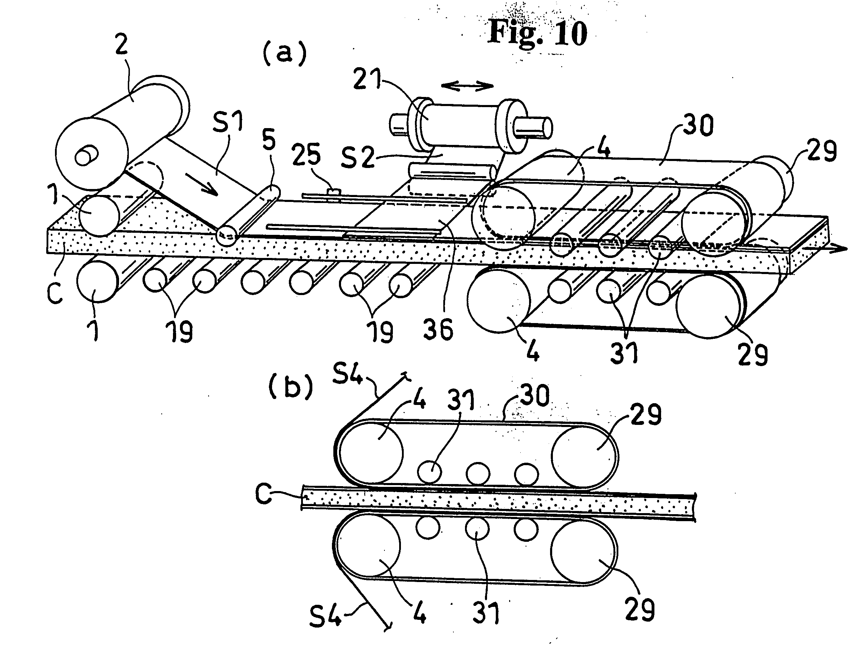

In a production method for a laminated composite illustrated in Figs. 10(a) and 10(b), as the sheet thermocompression-bonding means, a pair of upper and lower heating presses (4) is used, and further a pair of upper and lower cooling presses (29) having a size equal to that of the heating rolls (4) is used as a sheet cooling means. The upper rolls (4) and (29) are connected to each other and the lower rolls (4) and (29) are connected to each other by means of endless belts (30), respectively. The core material (C) and the face material sheets (S1) and (S2) are sandwiched between the pair of the upper rolls (4) and between the pair of the lower rolls (29) and pressed by the upper rolls and the lower rolls, respectively, thorough belts. Portions of the upper and lower belts (30) contacting the lateral sheet (S2) are pressed against the sheet (S2) by plural pressing rolls (31) (three rolls in Figs. 10(a) and 10(b)), respectively. As the material of the belts, glass fiber or aramide fiber into which Teflon is incorporated is usually used. The belts (30) may be metal belts made of stainless steel or the like. The core material (C) and the face material sheets (S1) and (S2) are carried in the state that the face material sheets (S1) and (S2) are laminated on each other in an orthogonal form, and then put between the belts (30) and pressed by the belts (30), so as to be sent out. At this time, the starting ends of the belts (30) are heated and pressed by the heating rolls (4) and the terminal ends of the belts are cooled by the cooling rolls (29). This makes continuous production of laminated products possible.

The three production devices of Figs. 8, 9 and 10 are appropriately selected dependently on subsequent processing. That is, in the case of laminating a surface layer (specifically, nonwoven fabric, a resin film, a rubber sheet, a flame resistant material, a weather resistant material or the like) which is not melted at the time of the laminating on the topmost layer of the laminated composite in the subsequent processing in order to give functions (decoration, bonding property, releasing ability, sliding stop, flame resistance, weather resistance and so on) to the surface, it is advisable to use the device in the roll manner illustrated in Figs. 8(a) and 8(b) or the device in the belt manner illustrated in Figs. 10(a) and 10(b), and further supply a non-melting sheet (S4) for forming the surface layer by means of the heating rolls (4) or the belt (30) as illustrated in Figs. 8(b) and 10(b). As illustrated in Fig. 9(b), by setting up heating rolls (4) for supplying the non-melting sheet separately before the heating press (26), the non-melting surface layer can be formed even if the device in the press manner illustrated in Fig. 9(a) is used.

Among the above-mentioned face material sheets, the sheet having a higher melting point than that of the face material sheet used as the surface material can be appropriately used as the non-melting sheet. Examples thereof include a resin sheet, a paper sheet, a metal sheet, a ceramic sheet, nonwoven fabric, and woven fabric.

Examples of the required function and the material for the function are as follows:
Decoration · · a sheet into which pigment is filled, a printed sheet, dyeing, or printed nonwoven fabric or woven fabric
Bonding ·· a sheet subjected to corona treatment, or a sheet containing a material having a polar group
Releasing ability · · a sheet having a low frictional coefficient, a sheet painted or coated in order to lower its frictional coefficient or a plated sheet.
Sliding stop ·· a sheet having a high frictional coefficient, a sheet in which irregularities are made, or nonwoven fabric or woven fabric in which resin or rubber is scattered
Flame resistance ·· a sheet containing a flame retardant, a sheet made of nonflammable material (metal, ceramic or the like), or a sheet painted or plated with nonflammable or flame resistant material
Weather resistance ·· a sheet containing an UV absorber, or a sheet for reflecting light

In the case of laminating a surface layer newly on the topmost layer, the surface layer may be deposited across an adhesive layer thereon. The adhesive layer is not limited and may be as follows: simultaneous lamination of an HM film, coating with an adhesive agent by means of a roll coater, spot-coating with an adhesive agent, use of a face material sheet on which an adhesive layer is beforehand laminated, or the like.

In the case of exhibiting decoration, bonding property, releasing ability, flame resistance or weather resistance by a melting sheet, the belt system illustrated in Figs. 10(a) and 10(b) is selected. In Fig. 10(b), the non-melting sheet (S4) is replaced by the melting sheet. In this way, the belt (30) keeps releasing ability in heating and melting, and cooling. Thus, the melting sheet can be used. Among the above-mentioned materials of the face material sheet, the material which can be melted and has a lower melting point than the surface material can be used as the melting sheet.

Examples of the required function and the material for the function are as follows:
Decoration · · a sheet into which pigment is filled
Bonding · · an HM film, a sheet subjected to corona treatment, or a sheet containing a material having a polar group
Releasing ability ·· a sheet having a low frictional coefficient
Sliding stop ·· a sheet having a high frictional coefficient
Flame resistance · · a sheet containing a flame retardant
Weather resistance ·· a sheet containing an UV absorber

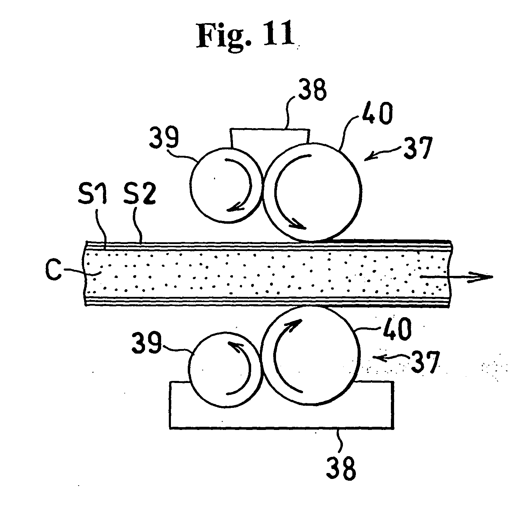

In order to exhibit decoration, bonding property, releasing ability, flame resistance, weather resistance or the like by a melting resin having a low viscosity, a liquid paint or the like, a pair of upper and lower roll coaters (37) may be separately disposed as illustrated in Fig. 11. Each of the roll coaters (37) is composed of a paint tank (38), a trans flow roller (39) and a composition roller (40). While the core material (C) and the face material sheet (S1) and (S2) are put between the composition rollers (40) and pressed by the rollers (40), a given paint can be applied to the lateral sheet (S2).

Examples of the required function and the material for the function are as follows:
Decoration ·· a melting resin into which pigment is filled, or a liquid paint
Bonding · · an HM melting resin, or a melting resin containing a material having a polar group
Releasing ability · · a melting resin having a low frictional coefficient
Sliding stop ·· a melting resin having a high frictional coefficient
Flame resistance ·· a melting resin containing a flame retardant
Weather resistance ·· a melting resin containing an UV absorber

### Example 3

As a core material, a polypropylene foamed body having a foaming magnification of 10 times, a thickness of 10 mm and a width of 1200 mm was used. As a sheet for a face material, a polyethylene drawn sheet having a thickness of 0.2 mm and a width of 1000 mm and a polyethylene drawn sheet having a thickness of 0.2 mm and a width of 500 mm were used. As an adhesive layer, a very low density polyethylene film (manufactured by Tamapoly Co., Ltd.) having a thickness 60 µm was beforehand laminated on a single face of the face material sheet.

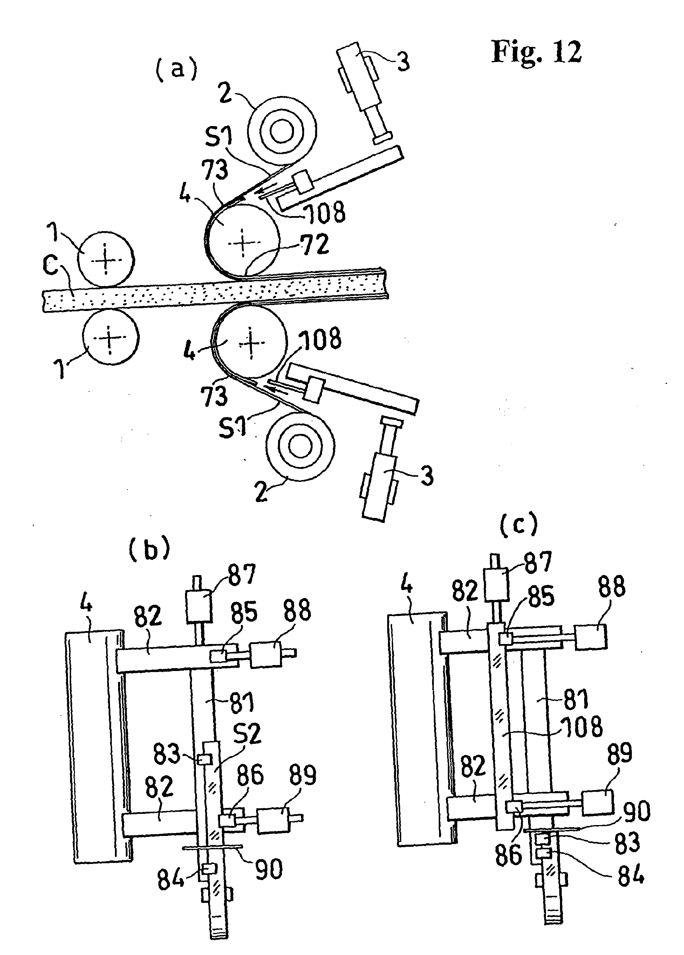

As illustrated in Figs. 12(a) to 12(c), the device for producing a laminated composite of this Example has a core material supplying means for supplying a core material (C) in the longitudinal direction, a longitudinal sheet supplying means for supplying a longitudinal sheet (S1) for a face material, in the longitudinal direction, on at least one face of the core material (C), a lateral sheet supplying means for supplying a lateral sheet (S2) for the face material, in the lateral direction, on the upper face of the longitudinal sheet (S1), and a sheet thermocompression-bonding means for pressing the longitudinal sheet (S1) and the lateral sheet (S2), which are stacked in an orthogonal form, onto the core material (C) under heating, wherein at a position (73) where the longitudinal sheet (S1) starts to contact a heating roll (4) of the sheet thermocompression-bonding means the lateral sheet supplying means supplies a cut piece (108) of the lateral sheet (S2) between the heating roll (4) and the longitudinal sheet (S1) .

The method for producing a laminated composite of this Example includes a core material supplying step of supplying a core material (C) in the longitudinal direction, a longitudinal sheet supplying step of supplying a longitudinal sheet (S1) for a face material, in the longitudinal direction, on at least one face of the core material (C), a lateral sheet supplying step of supplying a lateral sheet (S2) for the face material, in the lateral direction, on the upper face of the longitudinal sheet (S1), a sheet thermocompression-bonding step of pressing the longitudinal sheet (S1) and the lateral sheet (S2), which are stacked in an orthogonal form, onto the core material (C) under heating, and a lateral sheet supplying step of supplying a cut piece (108) of the lateral sheet between a heating roll (4) and the longitudinal sheet (S1) at a position where the longitudinal sheet (S1) starts to contact the heating roll (4) during the sheet thermocompression-bonding step.

As illustrated in Fig. 12(a), the core material (C) is first sent out at a line speed of 1 m/minute by a pair of upper and lower supplying rolls (1) of the same core material supplying as in Example 1, and then put between heating rolls (4) having a diameter of 300 mm and a clearance of 10 mm and pressed by the rolls (4).

A pair of upper and lower longitudinal sheet supplying means is each made of a reel (2) on which the longitudinal sheet (S1) having a width of 500 mm is wound, and is arranged at the lower stream of the heating rolls (4) in the core material feed direction. The longitudinal sheet (S1) is carried along the periphery of the heating rolls (4) and heated by the same rolls. Moreover, the longitudinal sheet (S1) together with the core material (C) is put between the core material (C) and a contact portion (72) of the rolls (4), and pressed by them. By the feeding capability of the heating rolls (4), the longitudinal sheet (S1) is sent out in the core material feed direction and laminated on the core material (C).

In the same manner as in Example 1, the longitudinal sheet supplying means has a tension adjustor based on pad brakes, and a sheet meandering correcting device based on a position sensor.

When the above-mentioned supply state becomes stable, the lateral sheet (S2) made of a polyethylene drawn sheet cut into a piece having a width of 500 mm and a length of 1000 mm is supplied, from a lateral sheet supplying device (3), in a direction perpendicular to the core material feed direction and between the heating rolls (4) and the longitudinal sheet (S1) at a position (73) where the longitudinal sheet (S1) starts to contact the heating rolls (4).

As illustrated in Figs. 12(b) and (c), the lateral sheet supplying means is composed of a lateral rail (81), a longitudinal rail (82) arranged perpendicularly to this, laterally moving chucks (83) and (84) and longitudinal moving chucks (85) and (86) for grasping the lateral sheet (S2), a cylinder (87) for moving the laterally moving chucks (83) and (84) in the lateral direction along the lateral rail (81), cylinders (88) and (89) for moving the longitudinal moving chucks (85) and (86) in the longitudinal direction along the rail (82), and a cutter for cutting the sheets for a face material into a given length. Each of the chucks (83), (84), (85) and (86) has a cylinder and a spring, is closed by pressing action of the cylinder, and is opened by spring pressure when the cylinder is released.

In the lateral sheet supplying means having the above-mentioned structure, the lateral sheet (S2) is grasped by the laterally moving chucks (83) and (84) to be fully pulled out in the width direction along the lateral rail (81). Thereafter, the lateral sheet (S2) is cut into a given length by the cutter (90) and a cut piece (108) is passed to the longitudinal moving chucks (85) and (86). After the laterally moving chucks (83) and (84) are returned to their original position, the longitudinal moving chucks (85) and (86) move toward the heating rolls (4) along the longitudinal rail (82) and the cut piece (108) is supplied to a position (73) where the longitudinal sheet (S1) starts to contact the heating rolls (4).

Thereafter, the longitudinal moving chucks (85) and (86) also return to their original position. This process is repeatedly performed. The next cut piece of the lateral sheet (S2) is supplied in such a manner that the tip of the cut piece in the longitudinal direction is jointed to the terminal end of the previous cut piece in the longitudinal direction. This makes it possible to connect a great number of the cut pieces for the lateral sheet to each other continuously.

The lateral sheet (S2) wherein a great number of the cut pieces are continuously connected is inserted between the heating rolls (4) and the longitudinal sheet (S1) and pressed by them. The lateral sheet (S2), together with the longitudinal sheet (S1), is carried along the peripheral face of the heating rolls (4), and the longitudinal sheet (S1) and the lateral sheet (S2) are heated. Further the longitudinal sheet (S1) and the lateral sheet (S2) are compressed on the core material (C) at a contact portion (72) between the core material (C) and the heating rolls (4), to produce a face material sheet in an orthogonal form.

After the thermocompression, a cooling roll, an air cooler or the like may be arranged right at the lower stream of the heating rolls (4) if necessary.

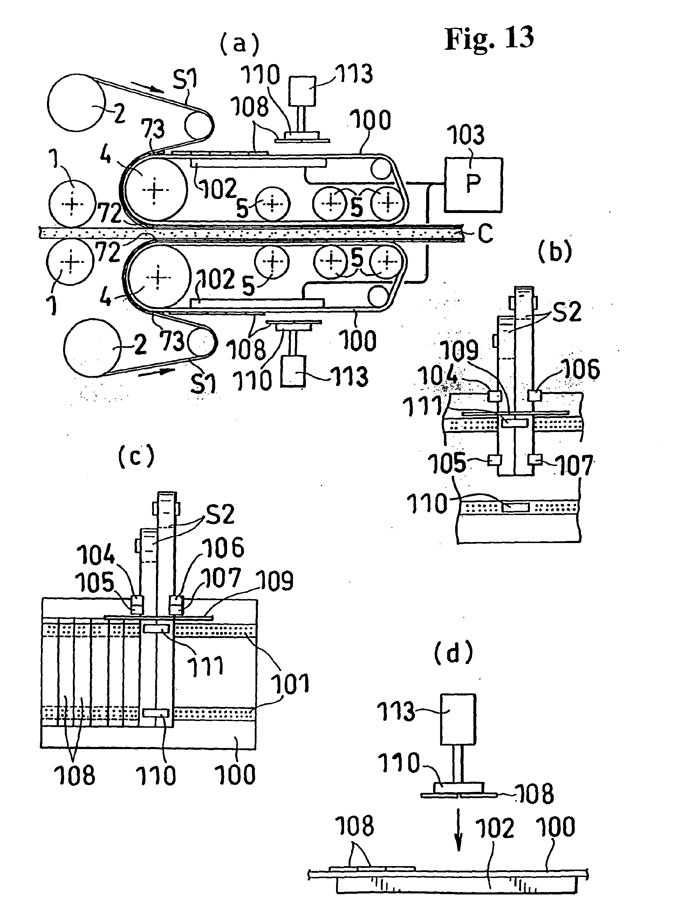

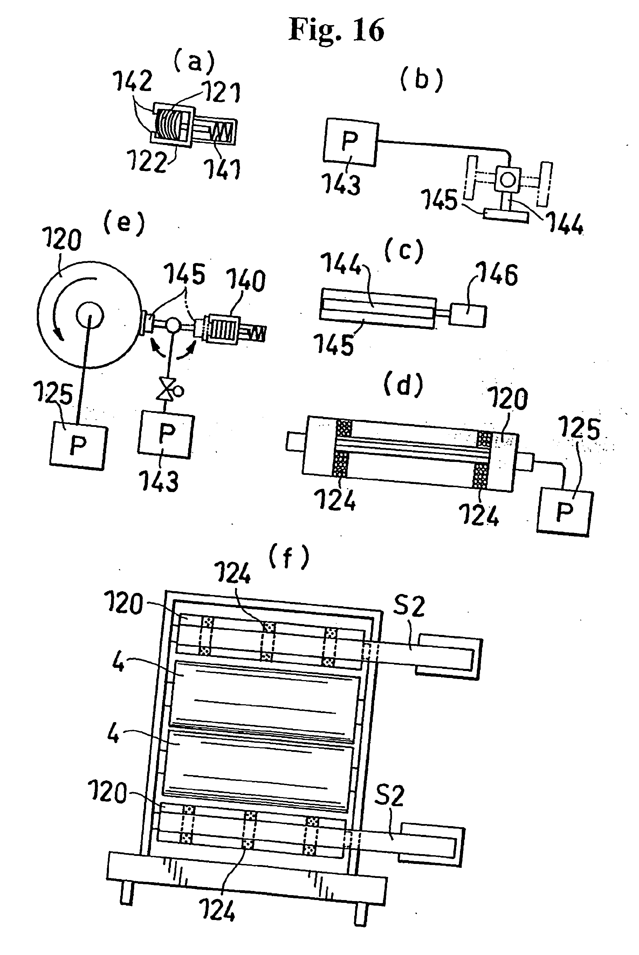

Another lateral sheet supplying means is illustrated in Figs. 13 (a) to 13 (d) . In this example, an upper belt (100) is stretched on an upper heating roll (4) and three upper cooling rolls (5). A lower belt (100) is stretched on a lower heating roll (4) and three lower cooling rolls (5). The respective belts (100) are driven at the same speed by the driving of the heating rolls (4). As illustrated in Figs. 16(a), 16(b), and 16(c), a large number of holes (101) for attracting are made at portions outer than the width of the longitudinal sheet (S1) in the belts (100), and the lower face of the belts (100) is provided with a vacuum device (102). The vacuum device (102) is made of a hollow air chamber or a sintered metal, and is connected to a vacuum pump (103) outside the belts.

A mechanism for pulling out the lateral sheet (S2) is the same described on the basis of Figs. 12 (a) to 12 (c) .

As illustrated in Figs. 13(c) and 13(d), a pair of the lateral sheets (S2) is fully pulled out in the width direction by chucks (105) and (107), and then is hold by the chucks (105) and (107) and chucks (104) and (106). The pair is then cut by a cutting device (109). The resultant pair of cut pieces (108) is attracted by attracting devices (110) and (111). Thereafter, the chucks (105) and (107) returns to their original position. The attracting devices (110) and (111) make an approach to the surface of the belt (100) by a cylinder (113) for elevation and descent, and the pair of the cut pieces (108) is fixed on the surface of the belt (100) by attracting from the rear face of the belt (100). By stopping the attraction of the attracting devices (110) and (111), the lateral sheet (S2) is delivered to the belt (100). This process is repeatedly performed. The next cut piece of the lateral sheet is supplied in such a manner that the tip of the cut piece in the longitudinal direction is jointed to the terminal end of the previous cut piece in the longitudinal direction. This makes it possible to connect a great number of the cut pieces for the lateral sheet to each other continuously.

The lateral sheet (S2) wherein a great number of the cut pieces are continuously connected is supplied at a position (73) where the longitudinal sheet (S1) starts to contact the heating rolls (4) by the belts (100), and inserted between the heating rolls (4) and the longitudinal sheet (S1) and pressed by them. The lateral sheet (S2), together with the longitudinal sheet (S1), is carried along the peripheral face of the heating rolls (4), and the longitudinal sheet (S1) and the lateral sheet (S2) are heated and further the longitudinal sheet (S1) and the lateral sheet (S2) are compressed on the core material (C) at a contact portion (72) between the core material (C) and the heating rolls (4) to produce a face material sheet in an orthogonal form.

In this way, produced are continuously laminated composites wherein the face material in a longitudinal and laterally orthogonal form, having a width of 1000 mm, is laminated on the core material having a thickness of 10 mm and a width of 1200 mm.

### Example 4

The production device for a laminated composite of this Example is an embodiment different from the longitudinal sheet supplying means and the lateral sheet supplying sheet of Example 3. As illustrated in Fig. 1(a), a pair of upper and lower longitudinal sheet supplying means each has a first reel (45) for supplying an upper longitudinal sheet wherein narrow longitudinal sheets (S5) are arranged in parallel at intervals of a lateral direction distance corresponding to the width of the single narrow longitudinal sheet (S5), and a second reel (46) for supplying a lower longitudinal sheet wherein narrow longitudinal sheets (S6) are arranged to be shifted from the narrow longitudinal sheets (S5) of the upper longitudinal sheet in the lateral direction by the interval corresponding to the width of the single narrow longitudinal sheet. The upper longitudinal sheet and the lower longitudinal sheet are supplied to be arranged alternately in the lateral direction. A lateral sheet supplying means is a means for supplying lateral sheets (S2) successively between the upper longitudinal sheet supplied from the first reel (45) and the lower longitudinal sheet supplied from the second reel (46), so as to be arranged in parallel.

In the production method for a laminated composite of this Example, a longitudinal sheet supplying step is a step of arranging the upper longitudinal sheet and the lower longitudinal sheet alternately in the lateral direction so as to be supplied, and a lateral sheet supplying step is a step of supplying the lateral sheets successively between the upper longitudinal sheet and the lower longitudinal sheet so as to be arranged in parallel.

The lateral sheet supplying means is the same as the lateral sheet supplying device (3) illustrated in Figs. 12(a) to 12(c). At a position where the narrow longitudinal sheets (S5) and (S6) start to contact heating rolls (4) of a sheet thermocompression-bonding means, a cut piece (108) of the lateral sheet (S2) can be supplied between the narrow longitudinal sheets (S5) and (S6).

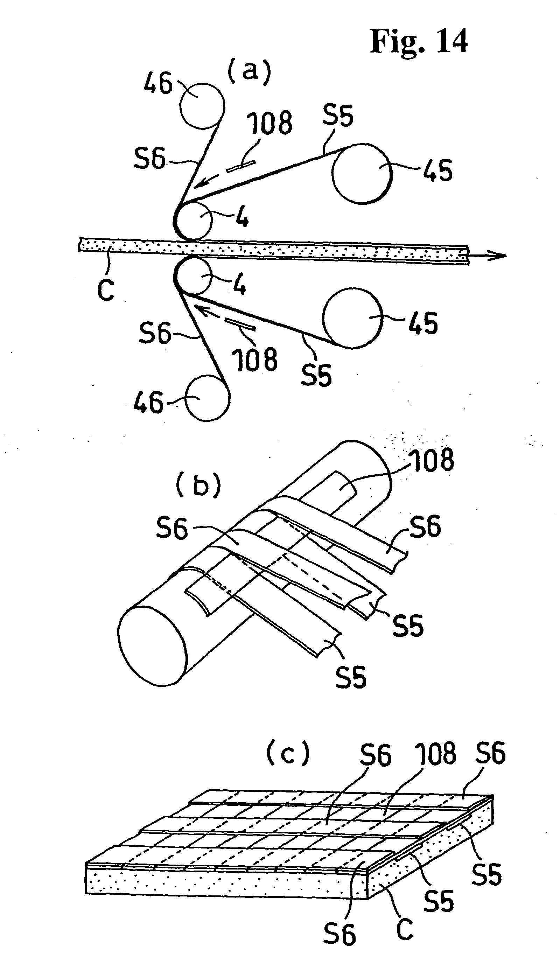

According to the production device of this Example, as illustrated in Fig. 14(b), the narrow longitudinal sheets (S5) of the lower longitudinal sheet are first supplied onto the core material (C), and the cut piece (108) of the lateral sheet is supplied onto this. Furthermore, the narrow longitudinal sheets (S6) of the upper longitudinal sheet are supplied onto the lateral sheets (S2). This is continuously repeated, thereby obtaining a laminated composite having uniformity in reinforcing-strength in the longitudinal direction and the lateral direction, wherein the narrow longitudinal sheets (S5) and (S6) and the lateral sheets (S2) are alternately woven.

### Example 5

As a core material, a polypropylene foamed body having a foaming magnification of 10 times, a thickness of 10 mm and a width of 1200 mm was used. As a sheet for a face material, a polyethylene drawn sheet having a thickness of 0.2 mm and a width of 1000 mm and a polyethylene drawn sheet having a thickness of 0.2 mm and a width of 300 mm were used.

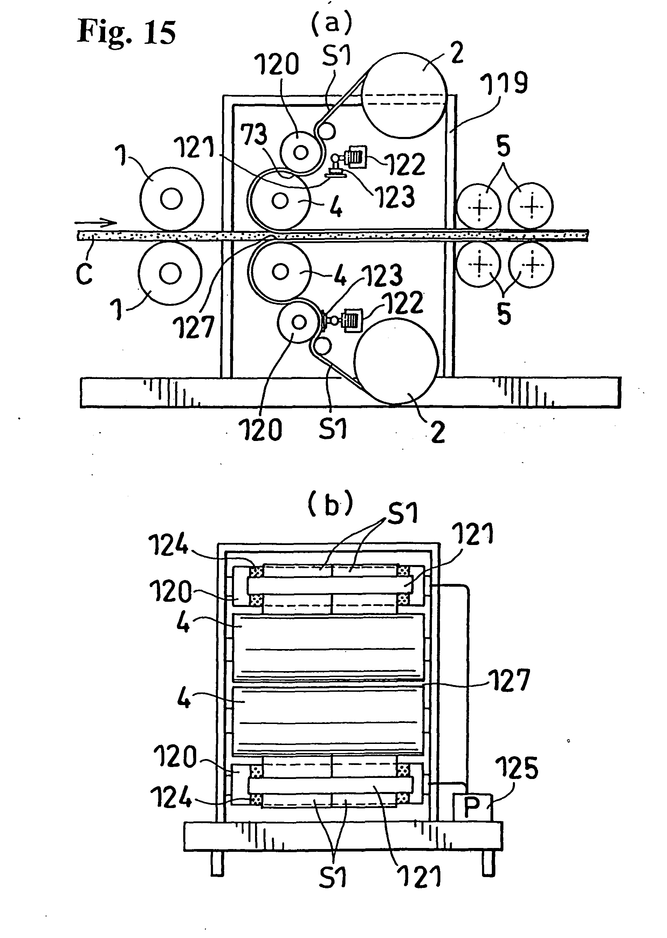

As illustrated in Figs. 15(a) and 15(b), the production device for a laminated composite of this Example includes a core supplying means for supplying a core material (C) in the longitudinal direction, a longitudinal sheet supplying means for supplying a longitudinal sheet (S1) for a face material in the longitudinal direction onto at least one face of the core material (C), a lateral sheet supplying means for supplying a lateral sheet (S2) for the face material in the lateral direction onto the upper or lower face of the longitudinal sheet (S1), a sheet thermocompression-bonding means for pressing the longitudinal sheet and the lateral sheet, stacked in an orthogonal form, against the core material under heating, a suction roll (an example of an attracting roll) (120) set at a position where the longitudinal sheet (S1) starts to contact a heating roll (4) of the sheet thermocompression-bonding means, and a single sheet supplying means for supplying cut pieces (121) of the lateral sheet (S2) one by one to the suction roll (120).

The method for producing a laminated composite of this Example includes a core supplying step of supplying a core material (C) in the longitudinal direction, a longitudinal sheet supplying step of supplying a longitudinal sheet (S1) for a face material in the longitudinal direction onto at least one face of the core material (C), a lateral sheet supplying step of supplying a lateral sheet (S2) for the face material in the lateral direction onto the upper face of the longitudinal sheet (S1), a sheet thermocompression-bonding step of pressing the longitudinal sheet and the lateral sheet, stacked in an orthogonal form, against the core material under heating, wherein the lateral sheet supplying step includes a single sheet supplying step of supplying cut pieces of the lateral sheet (S2) one by one to an attracting roll (4) set at a position where the longitudinal sheet (S1) starts to contact the heating roll (4) during the sheet thermocompression-bonding step.

In Fig. 15(a), the core material (c) is supplied to a device frame (119) in which heating rolls (4) are positioned at a line speed of 1 m/minute by supplying rolls (1) of the core material supplying means, and is then heated and pressed by the heating rolls (4) having a diameter of 300 mm and a clearance of 10 mm.

Next, in the same way as in Example 2, the longitudinal sheet is pulled out from reels (2) of a pair of upper and lower longitudinal sheet supplying means, carried along the periphery of suction rolls (120) arranged outside the heating rolls (4) and further along the periphery of the heating rolls (4) so as to be passed between the core material (C) and the heating rolls (4), and pressed by the rolls (4). As a result, the core material (C) and the longitudinal sheet (S1) are melted and bonded to each other.

The single sheet supplying means has a structure as illustrated in Figs. 16 (a) to 16(f). That is, the lateral sheet is beforehand cut to have a necessary width. The resultant cut pieces (121) in large numbers are put in a cassette (122). One of the cut pieces (121) is pulled out from the cassette (122) and reversed at 180° by an attracting and carrying device (123), to be supplied to suction rolls (120). Thereafter, the attracting and carrying device (123) is returned to its original position. This operation is repeatedly performed. As illustrated in Fig. 15(b), a great number of holes (124) are made at portions outer than the width of the longitudinal sheet (S1) in the suction rolls (120). The cut pieces (121) are attracted from the carrying device through the holes (124). The lateral sheet (S2) made of the cut pieces (121) in large numbers, together with the longitudinal sheet (S1), is fed to the heating rolls (4), supplied between the heating rolls (4) and the longitudinal sheet (S1) at a position (73) where the longitudinal sheet (S1) starts to contact the heating rolls (4), carried along the periphery of the heating rolls (4) in the same manner as in Example 3 to be fed together with the longitudinal sheet (S1), and pressed at a contact portion (127) between the heating rolls (4) and the core material (C) under heating. As a result, the lateral sheet (S2) and the longitudinal sheet (S1) are melted and bonded to the core material (C).

The step of supplying the lateral sheet (S2) to the suction roll will be described in detail on the basis of Figs. 16(a) to 16(f). As illustrated in Fig. 16(a), the lateral sheet (S2) is first cut to have a necessary width, and the resultant cut pieces in large numbers are put in the cassette (122). A pushing spring is set on the bottom of the cassette (122). Thus, as the cut pieces decrease, the cut pieces are successively pushed out toward the top from the bottom so that each of cut pieces (121) is easily caught by the attracting type carrying device (144). An inward projection (142) is formed at an outlet portion of the cassette (122) so that the cut pieces (121) are stopped.

Next, an attracting section (145) of the attracting type carrying device (144) connected to a vacuum pump (143) goes to take up one of the cut pieces (121) at the outlet of the cassette (122) and contacts the cut piece (121). At this time, the vacuum pump (143) acts to attract this cut piece (121).

Next, as illustrated in Fig. 16(c), the attracting section (145) is rotated at 180° by a servo motor (146) fitted to the carrying device (144), to carry the cut piece (121) at a position parallel to the surface of the suction roll (120) (Fig. 16(c)).

As illustrated in Figs. 16 (d) and 16(e), a great number of holes (124) are made at portions outer than the width of the longitudinal sheet (S1) in the suction rolls (120). The cut piece (121) is attracted through the holes (124) by attracting force of the vacuum pump (125). The cut piece (121) is moved from the carrying device (144) toward the suction roll (120) by weakening the attracting force of the carrying device (144). Thereafter, the attracting and carrying device (123) is returned to its original position. This operation is repeated.

The supply of the lateral sheets (S2) may be continuously performed as illustrated in Fig. 16(f). A mechanism for the continuous supply is the same as in Example 1.

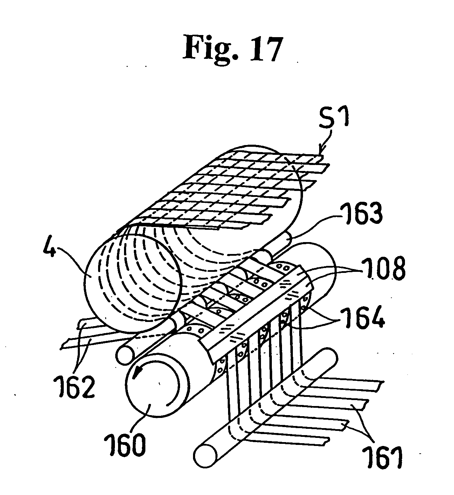

As illustrated in Fig. 17, a great number of narrow longitudinal sheets (S1) may be sent out in a hound's-tooth check form. In other words, it is allowable that the sheets are composed of sheets (161) supplied to the suction roll (160) in the feed direction and sheets (162) supplied in the reverse feed direction, only the former embrace the suction roll (160), and the latter embrace another intermediate roll, thereby supplying the longitudinal sheets to the heating rolls (4). In this method, attracting holes (164) can be made in the entire surface of the suction rolls (160) in the width direction.

In this way, produced are continuously laminated composites illustrated in Fig. 1 wherein the face material in a longitudinal and laterally orthogonal form, having a width of 1000 mm, is laminated on the core material having a thickness of 10 mm and a width of 1200 mm.

### Example 6

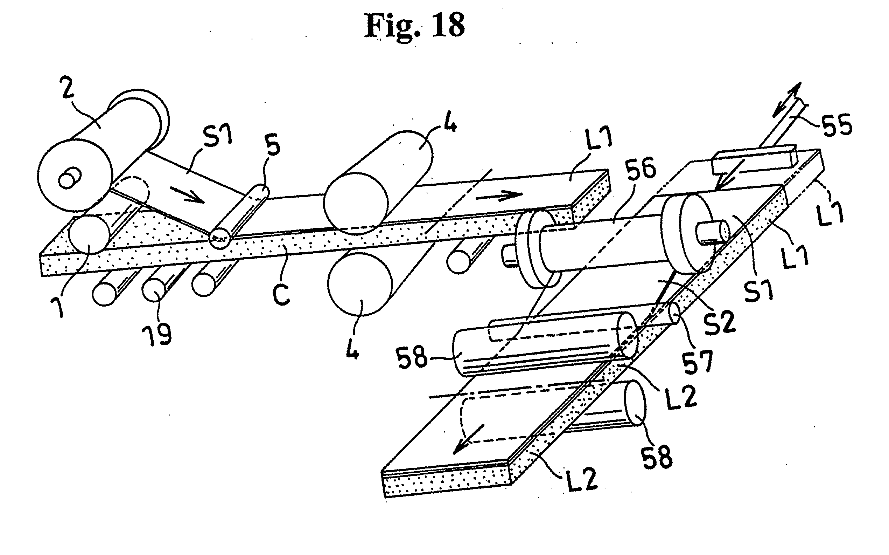

As illustrated in Fig. 18, the production device for a laminated composite of this Example (the production method of claim 17) includes a core material supplying means for supplying a core material (C) in the longitudinal direction, a longitudinal sheet supplying means for supplying a longitudinal sheet (S1) for a face material, in the longitudinal direction, onto at least one face of the core material (C), a first thermocompression-bonding means for pressing the longitudinal sheet (S1) and the core material (C) under heating to form an intermediate lamination, a first cutting means for cutting the intermediate lamination, a carrying means for carrying cut pieces (L1) of the intermediate lamination in a direction having a given angle (90° in the present Example) to the longitudinal direction, a lateral sheet supplying means for supplying a lateral sheet (S2) for the face material, in the carriage direction, onto the upper face or the lower face of the cut pieces (L1), a second thermocompression-bonding means for pressing the cut pieces (L1) of the intermediate lamination and the lateral sheet (S2), which are stacked, under heating to form a final lamination (L2), and a second cutting means for cutting the final lamination (L2).

The production method for a laminated composite of this Example includes a core material supplying step of supplying a core material (C) in a longitudinal direction, a longitudinal sheet supplying step of supplying a longitudinal sheet (S1) for a face material, in the longitudinal direction, onto at least one face of the core material (C), a first thermocompression-bonding step of pressing the longitudinal sheet (S1) and the core material (C) under heating to form an intermediate lamination (L1), a first cutting step of cutting the intermediate lamination, a carrying step of carrying cut pieces (L1) of the intermediate lamination in a direction having a given angle (90° in the present Example) to the longitudinal direction, a lateral sheet supplying step of supplying a lateral sheet (L2) for the face material, in the carriage direction, onto the upper face or the lower face of the cut pieces (L1) of the intermediate lamination, a second thermocompression-bonding step of stacking and pressing the intermediate lamination (L1) and the lateral sheet (S2) under heating to form a final lamination (L2), and a second cutting step of cutting the final lamination (L2).

In these Examples, the core material supplying means and the longitudinal sheet supplying means are the same as in Example 1, and the first thermocompression-bonding means is the same as the thermocompression-bonding means in Example 1. About the first cutting means, its structure itself is the same as that of the cutting means in Example 1 but the arrangement position thereof is not just after the lateral sheet supplying means but just after the heating rolls (4) as the thermocompression-bonding means. Only by adhering the longitudinal sheet (S1) to the core material (C), an intermediate lamination cut into a constant size is first formed. This intermediate lamination is sent out in the advance direction (in the longitudinal direction), and runs off from the carrying line in the longitudinal direction. Thereafter, the lamination is carried in the lateral direction by a cylinder (55).

The lateral sheet supplying means for pulling out the lateral sheet (S2) to the upper face of the cut pieces (L1) of the intermediate lamination has the same structure as the longitudinal sheet supplying means. Namely, this means is composed of a reel (56) on which the lateral sheet (S2) is wound, and a pushing roll (57) for pushing, against the intermediate lamination, the lateral sheet (S2) pulled out from the reel (56) to the surface of the intermediate lamination along this. This pulling-out direction is different from the longitudinal sheet supplying means by 90°. In this way, the lateral sheet (S2) is supplied and thermocompression-bonded in the same manner as the longitudinal sheet (S1) while the cut pieces (L1) of the intermediate lamination move in the lateral direction.

The second thermocompression-bonding means has the same structure as the first thermocompression-bonding means. Namely, the second means has a pair of heating rolls (58). By heating and pressing the cut pieces (L1) of the intermediate lamination and the lateral sheet (S2), which are stacked, a final lamination (L2) is formed. About the final lamination (L2), the lateral sheet (S2) portion thereof is cut at positions corresponding to size of the respective cut pieces (L1) of the intermediate lamination by the second cutting means.

In this way, produced are continuously laminated composites illustrated in Fig. 1 wherein the face material in a longitudinal and laterally orthogonal form, having a width of 1000 mm, is laminated on the core material having a thickness of 10 mm and a width of 1200 mm.

### Example 7

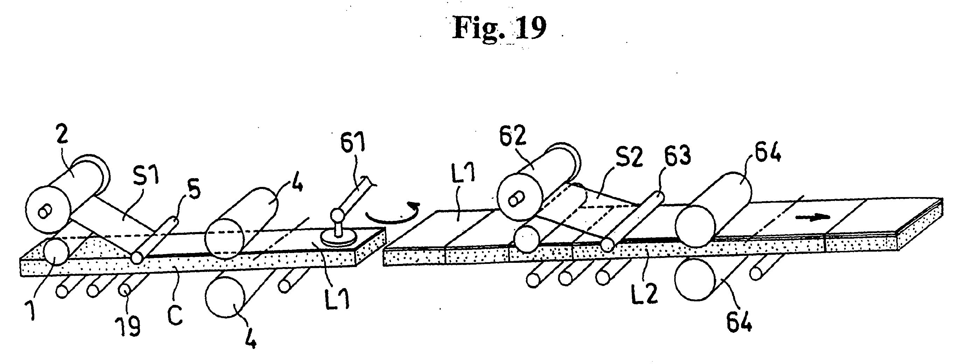

As illustrated in Fig. 19, the production device for a laminated composite of this Example includes a core material supplying means for supplying a core material (C) in the longitudinal direction, a longitudinal sheet supplying means for supplying a longitudinal sheet (S1) for a face material, in the longitudinal direction, onto at least one face of the core material, a first thermocompression-bonding means for pressing the longitudinal sheet (S1) and the core material (C) under heating to form an intermediate lamination, a first cutting means for cutting the intermediate lamination, a carrying means for rotating cut pieces (L1) of the intermediate lamination at an angle of 90° to carry the cut pieces in the longitudinal direction, a lateral sheet supplying means for supplying a lateral sheet (S2) for the face material, in the longitudinal direction, onto the upper face or the lower face of the cut pieces (L1), a second thermocompression-bonding means for pressing the cut pieces (L1) of the intermediate lamination and the lateral sheet (S2), which are stacked, under heating to form a final lamination (L2), and a second cutting means for cutting the final lamination (L2).

The production method for a laminated composite of this Example includes a core material supplying step of supplying a core material (C) in the longitudinal direction, a longitudinal sheet supplying step of supplying a longitudinal sheet (S1) for a face material, in the longitudinal direction, onto at least one face of the core material (C), a first thermocompression-bonding step of pressing the longitudinal sheet (S1) and the core material (C) under heating to form an intermediate lamination, a first cutting step of cutting the intermediate lamination, a carrying step of rotating cut pieces (L1) of the intermediate lamination at an angle of 90° to carry the cut pieces in the longitudinal direction, a lateral sheet supplying step of supplying a lateral sheet (L2) for the face material, in the longitudinal direction, onto the upper face or the lower face of the cut pieces (L1), a second thermocompression-bonding step of stacking and pressing the cut pieces (L1) of the intermediate lamination and the lateral sheet (S2) under heating to form a final lamination (L2), and a second cutting step of cutting the final lamination (L2).

In this Example, the core material supplying means and the longitudinal sheet supplying means are the same as in Example 1, and the first thermocompression-bonding means is the same as the thermocompression-bonding means in Example 1. About the first cutting means, its structure itself is the same as that of the cutting means in Example 9 but the arrangement position thereof is not just after the lateral sheet supplying means but just after the heating rolls (4) as the thermocompression-bonding means. Only by adhering the longitudinal sheet (S1) to the core material (C), an intermediate lamination cut into a constant size is first formed. This intermediate lamination is sent out in the advance direction (in the longitudinal direction), and the direction is rotated at 90° by attracting pads (61). Furthermore, the intermediate lamination is continuously carried in a carrying line along the longitudinal direction.

The lateral sheet supplying means for pulling out the lateral sheet (S2), in the longitudinal direction, onto the upper face of the cut pieces (L1) of the intermediate lamination has the same structure and as the longitudinal sheet supplying means. Namely, this means is composed of a reel (62) on which the lateral sheet (S2) is wound, and a pushing roll (63) for pushing, against the intermediate lamination, the lateral sheet (S2) pulled out from the reel (62) to the surface of the intermediate lamination along this. The pulling-out direction is also the same as in the case of the longitudinal sheet supplying means. In this way, the lateral sheet (S2) is supplied and thermocompression-bonded in the same manner as the longitudinal sheet (S1) while the cut pieces (L1) of the intermediate lamination move in the longitudinal direction.

The second thermocompression-bonding means has the same structure as the first thermocompression-bonding means. Namely, the second means has a pair of heating rolls (64). By heating and pressing the cut pieces (L1) of the intermediate lamination and the lateral sheet (S2), which are stacked, the final lamination (L2) is formed. About the final lamination (L2), the lateral sheet (S2) portion thereof is cut at positions corresponding to size of the respective cut pieces (L1) of the intermediate lamination by the second cutting means.

In this way, produced are continuously laminated composites illustrated in Fig. 1 wherein the face material in a longitudinal and laterally orthogonal form, having a width of 1000 mm, is laminated on the core material having a thickness of 10 mm and a width of 1200 mm.

A device and a method for producing a laminated composite according to the present invention are those for laminating at least one sheet on at least one face of a sheet-form core material, and can be used as a production method and a production device for obtaining a civil engineering and construction material, a construction material including a tatami mat core material, a material for vehicles, and the like.

## Claims

1. A device for producing a laminated composite comprising: core supplying means (1, 19) for supplying a core material (c) in a longitudinal direction; longitudinal sheet supplying means (2, 5) for supplying a longitudinal sheet (S1) for a face material in the longitudinal direction onto at least one face of the core material (C); lateral sheet supplying means (21, 56, 57, 62, 63) for supplying a lateral sheet (S2) for the face material in a lateral direction onto the upper face of the longitudinal sheet (S1); and sheet thermocompression-bonding means (4, 58, 64) for pressing the longitudinal sheet (S1) and the lateral sheet (S2) stacked in an orthogonal form against the core material (C) under heating.

2. The device for producing a laminated composite according to claim 1, wherein at a position (73) where the longitudinal sheet (S1) starts to contact a heating roll (4) of the sheet thermocompression-bonding means (4, 58, 64) the lateral sheet supplying means (21, 56, 57, 62, 63) supplies a cut piece (108) of the lateral sheet (S2) between the heating roll (4) and the longitudinal sheet (S1).

3. The device for producing laminated composite according to claim 1 or 2, wherein the longitudinal sheet supplying means is means for supplying upper side longitudinal sheets and lower side longitudinal sheets to be arranged alternatively in the lateral direction, and the lateral sheet supplying means is means for supplying plural lateral sheets (S2) successively between the upper side longitudinal sheets and the lower side longitudinal sheets so as to be arranged in parallel.

4. The device for producing a laminated composite according to claim 1, 2 or 3, wherein the lateral sheet supplying means includes an attracting roll (120) set at a position where the longitudinal sheet (S1) starts to contact the heating roll (4) of the sheet thermocompression-bonding means, a single sheet supplying means for supplying cut pieces (121) of the lateral sheet (S2) one by one to the attracting roll (120).

5. The device producing a laminated composite according to any preceeding claim, further comprising:
intermediate thermocompression-bonding means (4) for pressing the longitudinal sheet (S1) and the core material (C) under heating to form an intermediate lamination; first cutting means for cutting the intermediate lamination; carrying means (55) for carrying cut pieces (L1) of the intermediate lamination in a direction having a given angle to the longitudinal direction; and second cutting means for cutting the final lamination (L2), wherein the lateral sheet supplying means (56, 57) are for supplying the lateral sheet (S2) for the face material, in the carriage direction, onto the upper face or the lower face of the cut pieces (L1) and the thermocompression bonding means (58) are for pressing the cut pieces (L1) of the intermediate lamination and the lateral sheet (S2), which are stacked, under heating to form a final lamination (L2).

6. The device producing a laminated composite according to any preceeding claim 1 to 4, further comprising:
intermediate thermocompression-bonding means (4) for pressing the longitudinal sheet (S1) and the core material (C) under heating to form an intermediate lamination; first cutting means for cutting the intermediate lamination; carrying means (61) for rotating cut pieces (L1) of the intermediate lamination at an angle of 90° to carry the cut pieces (L1) in the longitudinal direction; and second cutting means for cutting the final lamination (L2), wherein the lateral sheet supplying means (62, 63) are for supplying the lateral sheet (S2) for the face material, in the longitudinal direction, onto the upper face or the lower face of the cut pieces (L1) and the thermocompression-bonding means (58) are for pressing the cut pieces (L1) of the intermediate lamination and the lateral sheet (S2), which are stacked, under heating to form a final lamination (L2).

7. A method for producing a laminated composite comprising: a core supplying step of supplying a core material (C) in a longitudinal direction, a longitudinal sheet supplying step of supplying a longitudinal sheet (S1) for a face material in the longitudinal direction onto at least one face of the core material (C); a lateral sheet supplying step of supplying a longitudinal sheet (S2) for the face material in a lateral direction onto the upper of lower face of the longitudinal sheet (S1); and a sheet thermocompression-bonding step of pressing the longitudinal sheet (S1) and the lateral sheet (S2) stacked in an orthogonal form against the core material (C) under heating.

8. The method for producing a laminated composite according to claim 7, further comprising: a lateral sheet supplying step for supplying a cut piece (108) of the lateral sheet (S2) between a heating roll (4) and the longitudinal sheet (S1) at a position (73) where the longitudinal sheet (S1) starts to contact the heating roll (4) during the sheet thermocompression-bonding step.

9. The method for producing a laminated composite according to claim 7 or 8, wherein the longitudinal sheet supplying step is a step of supplying upper side longitudinal sheets and lower side longitudinal sheets to be arranged alternatively in the lateral direction, and the lateral sheet supplying step is a step of supplying plural lateral sheets (S2) successively between the upper side longitudinal sheets and the lower side longitudinal sheets so as to be arranged in parallel.

10. The method for producing a laminated composite according to any preceeding claims 7 to 9, wherein the lateral sheet supplying step includes a single sheet supplying step of supplying cut pieces (121) of the lateral sheet (S2) one by one to an attracting roll (120) set at a position where the longitudinal sheet (S1) starts to contact the heating roll (4) during the sheet thermocompression-bonding step.

11. The method for producing a laminated composite according to any preceeding claims 7 to 10, further comprising:
an intermediate thermocompression-bonding step of pressing the longitudinal sheet (S1) and the core material (C) under heating to form an intermediate lamination; a first cutting step of cutting the intermediate lamination; a carrying step of carrying out pieces (L1) of the intermediate lamination in a direction having a given angle to the longitudinal direction; and a second cutting step of cutting the final lamination (L2), wherein the lateral sheet supplying step is a step of supplying the lateral sheet (S2) for the face material, in the carriage direction, onto the upper face or the lower face of the cut pieces (L1) and the thermocompression-bonding step is a step of pressing the cut pieces (L1) of the intermediate lamination and the lateral sheet (S2), which are stacked, under heating to form a final lamination (L2).

12. The method for producing a laminated composite according to any preceeding claims 7 to 10 comprising:
an intermediate thermocompression-bonding step of pressing the longitudinal sheet (S1) and the core material (C) under heating to form an intermediate lamination; a first cutting step of cutting the intermediate lamination; a carrying step of carrying cut pieces (L1) of the intermediate lamination at an angle of 90° to carry the cut pieces (L1) in the longitudinal direction; and a second cutting step of cutting the final lamination (L2), wherein the lateral sheet supplying step is a step of supplying the lateral sheet (S2) for the face material, in the longitudinal direction, onto the upper face of the lower face of the cut pieces (L1) and the thermocompression-bonding step is a step of pressing the cut pieces (L1) of the intermediate lamination and the lateral sheet (S2), which are stacked, under heating to form a final lamination (L2).
